# EUROPEAN PATENT SPECIFICATION

(11) **EP 4 084 025 B1**
(45) Date of publication and mention of the grant of the patent: **02.09.2026**
(21) Application number: 20905989.8
(22) Date of filing: 22.12.2020
(51) Int. Cl.: H01G 11/10, H01G 11/76, H01M 50/10, H01M 50/147, H01M 50/183, H01M 50/20, H01M 50/50, H01M 50/543, H01G 2/02, H01G 4/228, H01G 4/38, H01G 11/72, H01G 11/82

(54) **ELECTRICAL STORAGE MODULE**
ELEKTRISCHES SPEICHERMODUL
MODULE DE STOCKAGE ÉLECTRIQUE

(30) Priority: 27.12.2019 JP 2019238376; 31.01.2020 JP 2020015896; 31.01.2020 JP 2020015897
(43) Date of publication of application: 02.11.2022
(73) Proprietor: Panasonic Intellectual Property Management Co., Ltd., Osaka-shi, Osaka 540-6207 (JP)
(72) Inventor: KOHIRA, Kazutoshi, Osaka-shi, Osaka 540-6207 (JP); GESHI, Shinya, Osaka-shi, Osaka 540-6207 (JP)
(74) Representative: Novagraaf International SA
(86) International application number: PCT/JP2020/047862
(87) International publication number: WO 2021/132215

(56) References cited:
- WO-A1-2011/007532
- WO-A1-2018/180436
- WO-A1-2019/131359
- WO-A1-2019/131359
- WO-A1-2019/194053
- CN-U- 206 076 303
- DE-A1- 102016 219 302
- JP-A- 2017 521 846

## Description

### TECHNICAL FIELD

The present disclosure relates to a power storage module.

### BACKGROUND ART

Power storage modules are widely used as drive sources for vehicles, electronic devices, and the like. Conventional power storage modules each typically include a holder made of resin, metal, or the like to fix or hold a plurality of power storage devices. As an example of a power storage module, PTL 1 shows a battery block including a plurality of batteries in a cylindrical shape (power storage devices) that are each held with a positive electrode disposed on one side and a negative electrode disposed on the other side in a retainer (holder), a positive electrode lead part disposed on a positive electrode side of the plurality of batteries and fixed to one end (first retainer) of the retainer, and a negative electrode lead part disposed on a negative electrode side of the plurality of batteries and fixed to the other end (second retainer) of the retainer. PTL 2 relates to energy cell holding devices and energy cell modules for motor vehicles. PTL 3 relates to a battery module including a plurality of batteries and a bus bar that electrically connects the batteries. PTL 4 relates to a battery module. PTL 5 relates to a battery can and a battery having the battery can. PTL 6 relates to an electric vehicle chassis.

### Citation List

### Patent Literature

PTL 1: Japanese Patent No. 6286679
PTL 2: DE 10 2016 219302 A1
PTL 3: WO 2019/194053 A1
PTL 4: WO 2019/131359 A1
PTL 5: WO 2018/180436 A1
PTL 6: CN 206 076 303 U

### SUMMARY OF THE CLAIMED INVENTION

From the viewpoint of driving efficiency and convenience of equipment equipped with a power storage module, reduction in weight of the power storage module is desired. Thus, an object of the present disclosure is to provide a power storage module that can be reduced in weight.

The problem is solved by a power storage module according to claim 1, further preferred embodiments are defined in the dependent claims. It relates to a power storage module including: a plurality of power storage devices; and a first current collector that holds the plurality of power storage devices. The plurality of power storage devices each include a case having an opening, an electrode assembly including a first electrode and a second electrode housed in the case, and a sealing member that seals the opening. The case includes a tubular part including one end provided with the opening, and a bottom that closes the other end of the tubular part. The case is electrically connected to the first electrode. The first current collector has a plurality of first through-holes that set and position the corresponding one of the plurality of electric storage devices, and the plurality of first through-holes each have a periphery electrically connected to the case. Other features of the claimed power storage module are as defined in claim 1.

According to the present disclosure, the current collector also functions as a holder, so that the current collector holds the power storage devices. This structure does not necessarily use a holder and reduces the number of components in the power storage module, so that the power storage module can be reduced in weight.

Although novel features of the claimed invention are set forth in the appended claims, the claimed invention will be better understood by the following detailed description with the drawings, taken in conjunction with other objects and features of the claimed invention, both as to construction and content.

### BRIEF DESCRIPTION OF THE DRAWINGS

Figs. 1-20 relate to aspects of the present disclosure not forming part of the claimed invention but that are deemed useful for the general understanding. Fig. 1 is a perspective view of a power storage module according to a first exemplary aspect of the present disclosure not forming part of the claimed invention.
Fig. 2 is an exploded perspective view of the power storage module of Fig. 1.
Fig. 3 includes a plan view (a), a side view (b), and a bottom view (c), of a first current collector.
Fig. 4 includes a perspective view (a) of a plurality of power storage devices before being held by a first current collector, and a perspective view (b) of the plurality of power storage devices held by the first current collector.
Fig. 5 is a perspective view of a second current collector.
Fig. 6 includes a plan view (a), a side view (b), and a bottom view (c), of the second current collector.
Fig. 7 is a sectional view illustrating a structure of an example of the power storage device.
Fig. 8 is a sectional view of a main part of the power storage device inserted into the first current collector.
Fig. 9 is an enlarged view of a main part of Fig. 8, and illustrates a weld between the first current collector and an opening edge of a case.
Fig. 10 is a perspective view of a power storage module according to another exemplary aspect of the present disclosure not forming part of the claimed invention.
Fig. 11 is a perspective view of a power storage module according to a second exemplary aspect of the present disclosure not forming part of the claimed invention.
Fig. 12 is an exploded perspective view of the power storage module of Fig. 11.
Fig. 13 includes a plan view (a), a side view (b), and a bottom view (c), of a first current collector.
Fig. 14 includes a perspective view (a) of a plurality of power storage devices before being held by a first current collector, and a perspective view (b) of the plurality of power storage devices held by the first current collector.
Fig. 15 is a perspective view of a second current collector.
Fig. 16 includes a plan view (a), a side view (b), and a bottom view (c), of the second current collector.
Fig. 17 is a sectional view illustrating a structure of an example of a power storage device.
Fig. 18 is a sectional view of a main part of a power storage device inserted into the first current collector.
Fig. 19 is an enlarged view of a main part of Fig. 18, and illustrates a weld between the first current collector and an opening edge of a case.
Fig. 20 is a perspective view of a power storage module according to another aspect of the present disclosure not forming part of the claimed invention.
Fig. 21 is a perspective view of a power storage module according to a first exemplary embodiment of the claimed invention.
Fig. 22 is an exploded perspective view of the power storage module of Fig. 21.
Fig. 23 includes a plan view (a), a side view (b), and a bottom view (c), of a first current collector.
Fig. 24 includes a perspective view (a) of a plurality of power storage devices before being held by a first current collector, and a perspective view (b) of the plurality of power storage devices held by the first current collector.
Fig. 25 is a perspective view of a second current collector.
Fig. 26 includes a plan view (a), a side view (b), and a bottom view (c), of the second current collector.
Fig. 27 is a sectional view illustrating a structure of an example of the power storage device.
Fig. 28 is a sectional view of a main part of the power storage device inserted into the first current collector.
Fig. 29A is an enlarged view of a main part of Fig. 28, and illustrates a weld between the first current collector and an opening edge of a case.
Fig. 29B is a diagram illustrating a modified example of the exemplary embodiment of Fig. 29A.
Fig. 30 is a perspective view of a power storage module according to another embodiment of the claimed invention.

### DESCRIPTION OF ASPECTS OF THE PRESENT DISCLOSURE NOT FORMING PART OF THE CLAIMED INVENTION

### <<First exemplary aspect>>

A first exemplary aspect of the present disclosure will be described. A power storage module according to the present exemplary aspect includes a plurality of power storage devices and a first current collector holding the plurality of power storage devices. The plurality of power storage devices are held by the first current collector and integrated, so that a holder for holding the plurality of power storage devices is not essential. Thus, the holder can be greatly reduced in size or eliminated. The power storage module is thus remarkably improved in energy density per weight. As a result, a traveling distance of a vehicle equipped with the power storage module or the like can be easily extended, for example. The plurality of power storage devices may be held by the first current collector and fixed to the first current collector.

Altematively, the power storage module may include a holder for fixing or holding the plurality of power storage devices. For example, the power storage module may further include a holder having a plurality of containers for setting and positioning bottoms of a corresponding one of the plurality of power storage devices. This structure further enhances resistance to an external force such as vibration. Additionally, a heat absorbing agent or a heat dissipation member may be interposed between a pair of the power storage devices adjacent to each other.

The power storage devices each include a case having an opening, an electrode assembly including a first electrode and a second electrode that are housed in the case, and a sealing member sealing the opening. Although the case may be in a cylindrical shape, for example, the shape is not particularly limited. The electrode assembly has a structure in which, for example, the first electrode and the second electrode are wound with a separator interposed therebetween. When each power storage device is a battery, one of the first electrode and the second electrode is a positive electrode, and the other is a negative electrode.

The case includes a tubular part, a flange part extending in a direction away from an opening provided at one end of the tubular part, and a bottom closing the other end of the tubular part. The case is electrically connected to the first electrode.

The first current collector includes a plurality of first through-holes for setting and positioning a corresponding one of the plurality of power storage devices. That is, an arrangement of the plurality of power storage devices is determined by an arrangement of the first through-holes. In this case, a structure of the power storage module or the number of power storage devices connected in parallel can be easily changed only by changing the arrangement (layout) of the first through-holes in the first current collector. Here, the first through-holes each have a periphery electrically connected to the flange part.

The plurality of power storage devices may be arranged side by side such that axes of electrode assemblies are directed in the same direction and cases each have the opening disposed on the same side. More specifically, the plurality of power storage devices may be arranged such that axes of the electrode assemblies are substantially parallel to each other and have respective first end surfaces substantially flush with each other and respective second end surfaces substantially flush with each other, and tubular parts of the respective cases have side surfaces adjacent to each other.

The plurality of power storage devices may be held by the first current collector in any manner. For example, the power storage devices each may be fixed to the first current collector by joining the periphery of the first through-hole to the flange part of the case. Joining the flange part and the periphery of the first through-hole expands the flange part to enable securing a region where the first current collector and the case can be connected. The periphery of the first through-hole and the flange part may be at least partially joined by welding. The joining by welding enables the case and the first current collector to be firmly fixed to each other. Additionally, connection resistance between the case and the first current collector can be reduced.

The periphery of the first through-hole may have a wall that extends toward the bottom of the case of the power storage device, and comes into contact with the tubular part of the case, or presses against the tubular part. Such a wall may have a ring shape surrounding the tubular part, for example. The wall also may have a tongue shape formed intermittently in a circumferential direction of the tubular part, or a shape in which a part of the wall in a ring shape is cut out in the circumferential direction. Altematively, the wall may be formed by connecting a separate member to the periphery of the first through-hole. This structure enables the power storage device to be more stably held by the first current collector.

The power storage module may further include a second current collector electrically connected to the second electrode of each electrode assembly. In this case, the flange part may be disposed between the first current collector and the second current collector. More specifically, the first current collector and the second current collector may be disposed overlapping each other by sandwiching the flange part. This structure enables the flange part to be more firmly fixed by both the first current collector and the second current collector. The first current collector and the second current collector may have outer shapes in a plane that substantially correspond to each other.

Between the first current collector and the second current collector, an insulating member may be interposed. At this time, a first surface of the insulating member may be brought into contact with the second current collector, and a second surface located opposite to the first surface may be brought into contact with the flange part or the sealing member. When both the first and second current collectors are disposed with the flange part interposed therebetween, both the first current collector and the second current collector can be disposed closer to one of ends (specifically, an end having the sealing member) of the power storage device. Thus, no current collecting structure is required to be provided on the other end (specifically, the end closer to a bottom) of the power storage device. This structure enables reducing a space required by the power storage device in the axial direction, and thus is advantageous for improving the power storage module in volume energy density.

Although a structure of the sealing member is not particularly limited, the structure may include a sealing plate, an annular cap surrounding the sealing plate, and a gasket insulating the sealing plate from the cap, for example. When the sealing member having a structure as described above is used, the sealing plate and the second electrode of the electrode assembly can be electrically connected to each other by electrically connecting the flange part to the cap.

The second current collector may have a second through-hole in a region facing the sealing plate, or may have a tongue-shaped lead extending from a periphery of the second through-hole toward the inside of the second through-hole. When the tongue-shaped lead is electrically connected to the sealing plate, the second current collector is electrically connected to the sealing plate.

Although a type of the power storage device is not particularly limited, examples the power storage device include a primary battery, a secondary battery, a lithium ion capacitor, an electric double layer capacitor, and a solid electrolytic capacitor. Among them, a non-aqueous electrolyte secondary battery (including an all-solid-state battery) such as a lithium ion secondary battery having a high energy density can be suitably used.

Although the power storage module according to the first exemplary aspect of the present disclosure will be specifically described below with reference to the drawings, the present disclosure is not limited the following.

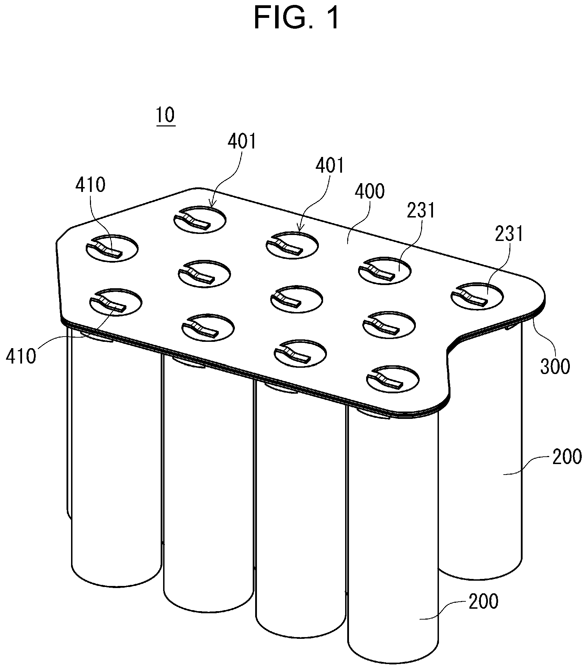

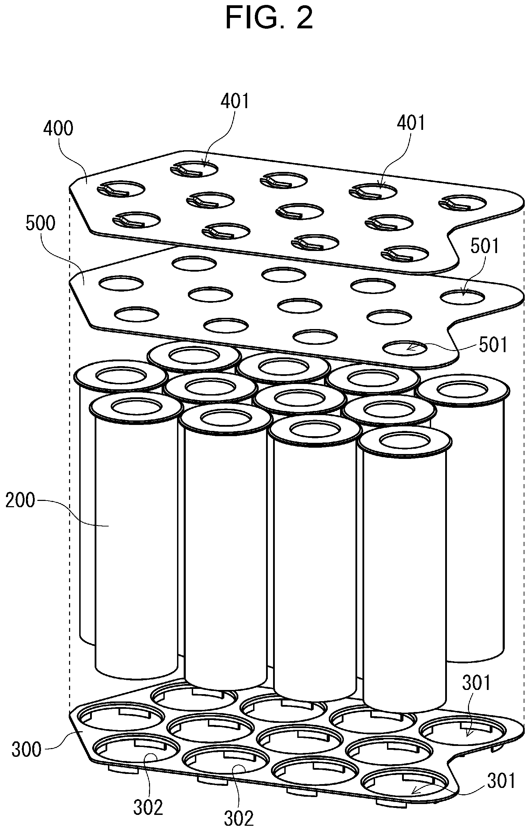

Fig. 1 is a perspective view of a power storage module according to an exemplary aspect of the present disclosure. Fig. 2 is an exploded perspective view of the power storage module of Fig. 1. Power storage module 10 includes a plurality of power storage devices 200 each having a cylindrical shape, and first current collector 300 and second current collector 400 that hold the plurality of power storage devices 200. First current collector 300 also serves to integrate the plurality of power storage devices 200. The plurality of power storage devices 200 may be arranged side by side such that axes of electrode assemblies thereof are directed in the same direction and cases each have an opening disposed on the same side.

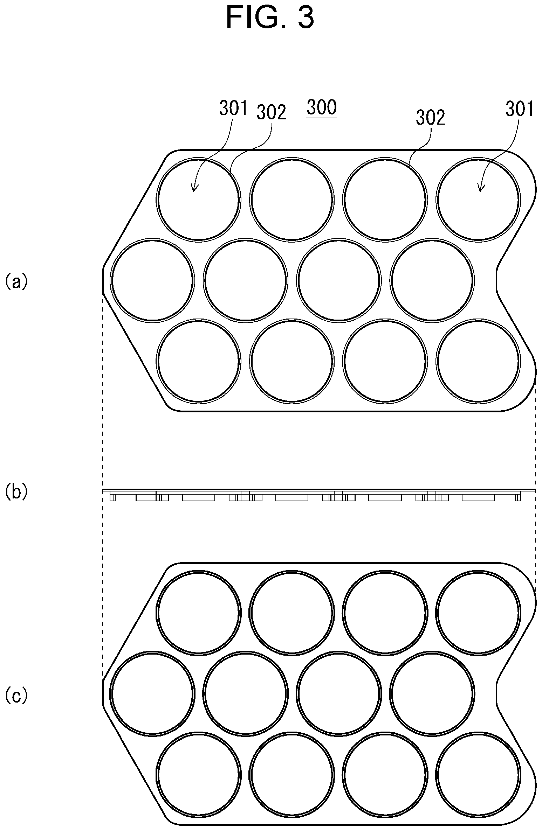

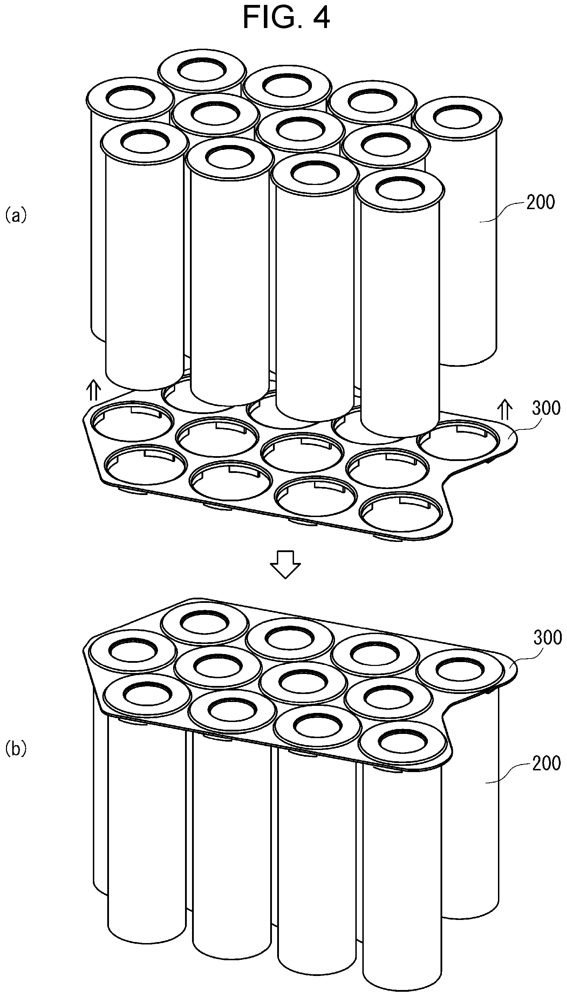

Fig. 3 includes a plan view (a), a side view (b), and a bottom view (c), of the first current collector. Fig. 4 includes a perspective view (a) of a plurality of power storage devices before being held by the first current collector, and a perspective view (b) of the plurality of power storage devices held by the first current collector. First current collector 300 has a plurality of first through-holes 301 through which a corresponding one of the plurality of power storage devices 200 are inserted and positioned. Thus, an arrangement of the plurality of power storage devices 200 is easily determined by an arrangement of first through-holes 301. Each power storage device 200 is inserted into the corresponding one of first through-holes 301 from a bottom side and positioned. Although an example is illustrated in which twelve power storage devices are arranged in a honeycomb shape (zigzag shape) to have a closest-packed filling, the arrangement, number, and the like of the power storage devices are not particularly limited. First current collector 300 can be obtained by processing a metal sheet by punching, pressing, or the like.

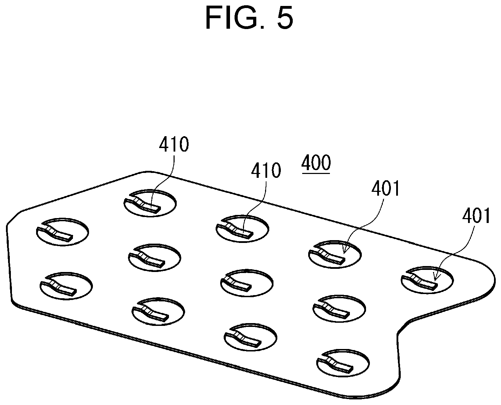

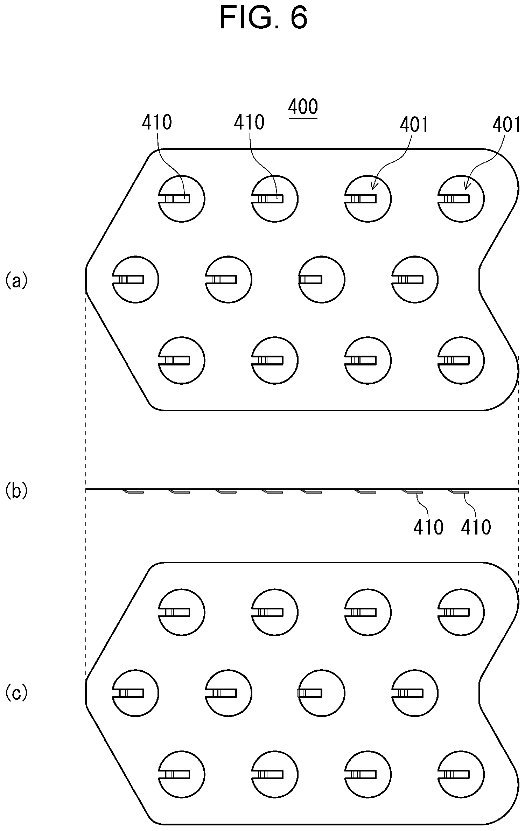

Fig. 5 is a perspective view of a second current collector, and Fig. 6 includes a plan view (a), a side view (b), and a bottom view (c), of the second current collector. Second current collector 400 is a plate-like member having second through-holes 401 at positions corresponding to positions of corresponding one of the plurality of power storage devices 200. Second current collector 400 can be obtained by processing a metal sheet by punching, pressing, or the like.

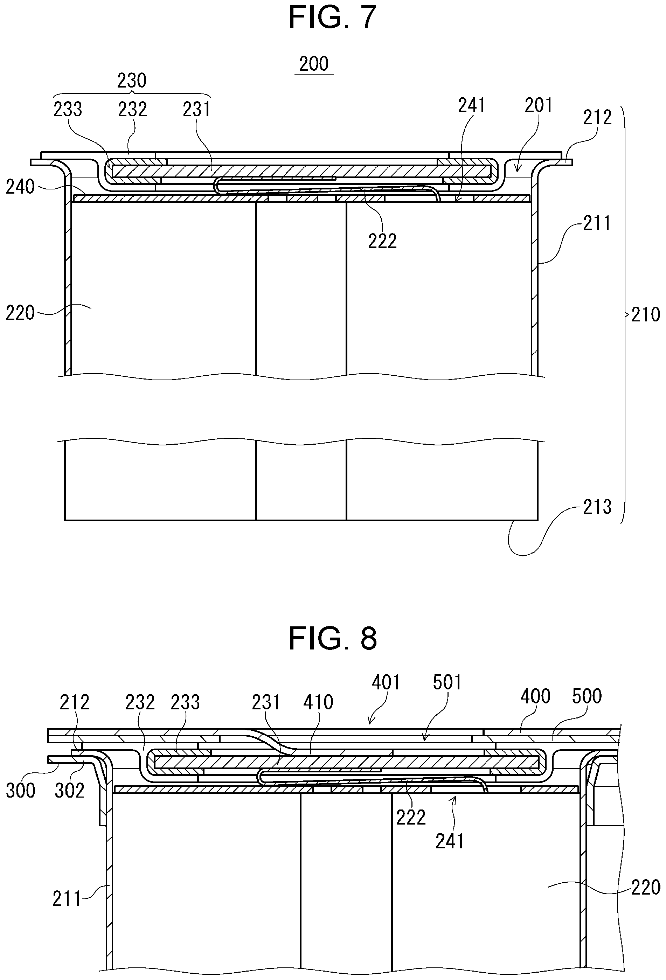

Fig. 7 is a sectional view illustrating a structure of an example of power storage device 200. Power storage device 200 includes case 210 having a cylindrical shape and opening 201, electrode assembly 220 including a first electrode and a second electrode housed in case 210, and sealing member 230 sealing opening 201.

Case 210 includes tubular part 211, flange part 212 extending in a direction away from opening 201 provided at one end of tubular part 211, and bottom 213 closing the other end of tubular part 211. Flange part 212 is an annular part having an outer diameter larger than an outer diameter of tubular part 211, and extends substantially perpendicularly to the axis from one end of tubular part 211 of case 210 and radially outward of opening 201.

Sealing member 230 includes sealing plate 231, cap (outer ring) 232 having an annular shape and surrounding sealing plate 231, and gasket 233 insulating sealing plate 231 from cap 232. Flange part 212 is electrically connected to cap 232. Specifically, flange part 212 and a periphery of cap 232 are electrically connected to each other by being joined to each other by welding over the entire circumference of opening 201. This structure maintains sealability of the inside of can case 210.

Between electrode assembly 220 and sealing member 230, internal insulating plate 240 is disposed to prevent electrode assembly 220 from coming into contact with sealing member 230. Internal insulating plate 240 is provided with lead hole 241 of a predetermined size. Lead 222 led out from the second electrode constituting electrode assembly 220 passes through lead hole 241, and is connected to a surface (inner surface) of sealing plate 231, the surface facing the inside of the case. Thus, sealing plate 231 has the same polarity as that of the second electrode. In contrast, the first electrode constituting electrode assembly 220 is electrically connected to case 210. Thus, case 210 has the same polarity as that of the first electrode.

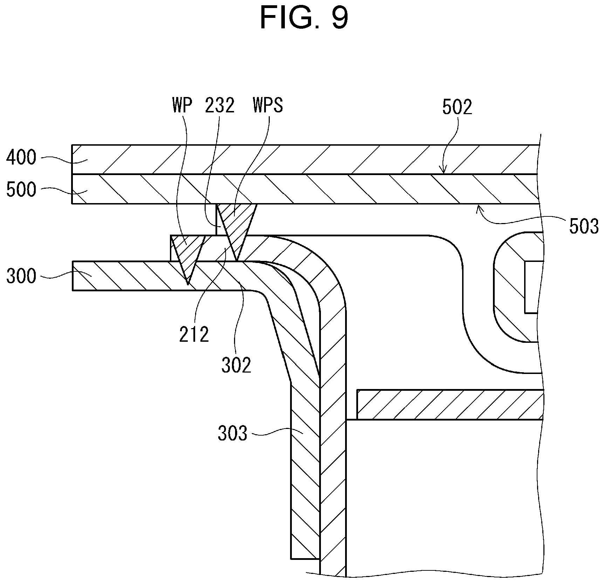

Fig. 8 is a sectional view of a main part of power storage device 200 held by first current collector 300. Fig. 9 is an enlarged view of a main part of Fig. 8, and illustrates a weld between first current collector 300 and flange part 212 of case 210. When flange part 212 and first through-hole 301 are viewed in the axial direction of case 210, flange part 212 has a diameter larger than a diameter of first through-hole 301. Thus, flange part 212 and periphery 302 of first through-hole 301 overlap each other over the entire circumference of flange part 212. Flange part 212 and periphery 302 of first through-hole 301 have parts overlapping each other and directly in contact with each other, and the parts can be joined by welding. This structure causes the plurality of power storage devices 200 to be firmly fixed to and integrated with first current collector 300. Although a welding method is not particularly limited, laser welding is convenient, for example.

Fig. 9 illustrates an example of weld WP when flange part 212 and periphery 302 of first through-hole 301 are welded with a laser from above flange part 212. Flange part 212 and periphery 302 of first through-hole 301 may be at least partially welded.

Weld WP between flange part 212 and periphery 302 may be formed at a position outward from a weld (referred to below as weld WPS) between flange part 212 and cap 232 on flange part 212 in a radial direction of tubular part 211. When power storage device 200 is joined to first current collector 300 after power storage device 200 is manufactured by joining flange part 212 to cap 232, the positional relationship of the welds, as described above, improves workability and reliability of manufacturing the power storage module as compared with a structure in which weld WP is formed at a position inward from weld WPS on the flange part. This is because when weld WP is formed in a region where flange part 212 is sandwiched between cap 232 and first current collector 300, the three members need to be simultaneously welded. This welding requires more energy for welding as compared with a method for simply welding two members of flange part 212 and first current collector 300. Additionally, weld WP is also required to maintain airtightness of power storage device 200. Thus, welding with higher accuracy is required. In contrast, when flange part 212 extends outward from cap 232 and weld WP is formed at a position outward from weld WPS on the flange part as illustrated in Fig. 9, two members of flange part 212 and first current collector 300 can be welded.

When power storage device 200 is manufactured by welding flange part 212 to cap 232 after flange part 212 is welded to first current collector 300, the structure in which weld WP is located outward from weld WPS on flange part 212 enhances reliability of the power storage module as compared with the structure in which weld WP is located inward from weld WPS on flange part 212. When weld WPS is formed after weld WP is formed, the structure in which weld WP is located inward from weld WPS causes cap 232 to come into contact with a welding mark of weld WP earlier formed. The welding mark is likely to be lower in flatness than an unwelded part, so that a placement tolerance is likely to increase when cap 232 is disposed on flange part 212. When the welding mark has an exposed and raised surface, a gap may be formed in an unwelded part between cap 232 and flange part 212. Forming weld WPS with the gap is more difficult than without the gap. In contrast, when flange part 212 extends outward from cap 232 and weld WP is outward from weld WPS, a possibility that weld WP comes into contact with cap 232 when weld WPS is formed can be suppressed.

When a recess (or a step) extending from periphery 302 of first current collector 300 is formed, and weld WP is formed while flange part 212 is set in the recess, the power storage module can be further reduced in height. Weld WP is not limited to the above position, and may be formed between a periphery of flange part 212 and an upper surface of first current collector 300.

From periphery 302 of first through-hole 301 of first current collector 300, wall 303 in a ring shape extending toward bottom 213 of case 210 of power storage device 200 is formed. Wall 303 in a ring shape is disposed in contact with the entire circumference of tubular part 211 near flange part 212. Wall 303 in a ring shape facilitates more accurate positioning of power storage device 200 and serves to restrict displacement of power storage device 200 due to vibration or the like.

Second current collector 400 is disposed overlapping first current collector 300 by sandwiching flange part 212. More specifically, first current collector 300 and second current collector 400 are disposed overlapping each other by sandwiching a periphery part of cap 232 together with flange part 212. That is, both first current collector 300 and second current collector 400 are disposed close to sealing member 230 of power storage device 200. Thus, no current collecting structure needs to be provided close to bottom 213 of power storage device 200, and thus reducing a space required by power storage device 200 in the axial direction.

Second through-hole 401 of second current collector 400 is located immediately above sealing member 230 of each of a plurality of power storage devices 200. For example, second through-hole 401 serves to guide gas discharged from power storage device 200 at an abnormality to a predetermined duct. Tongue-shaped lead 410 is led out from a periphery of second through-hole 401 toward the inside of the second through-hole. Tongue-shaped lead 410 is electrically connected to a surface (outer surface) of sealing plate 231, the surface facing outward from the case. Thus, second current collector 400 has the same polarity as sealing plate 231 and the second electrode.

Between first current collector 300 and second current collector 400, insulating member 500 is interposed. Insulating member 500 is a plate-like member having first surface 502 and second surface 503 located opposite to first surface 502. Insulating member 500 also has third through-holes 501 at positions corresponding to sealing members 230 of a corresponding one of the plurality of power storage devices 200. First surface 502 of insulating member 500 is in contact with second current collector 400. Then, second surface 503 is in contact with cap 232 of sealing member 230. This structure enables cap 232 and flange part 212 to be sandwiched between insulating member 500 and first current collector 300. Thus, power storage device 200 can be more firmly held. At this time, insulating member 500 and first current collector 300 may be fastened with a screw or the like. When flange part 212 extends outward from cap 232 as illustrated in Fig. 9, insulating member 500 may be in contact with the extending part. This structure enables power storage device 200 to be more firmly held. When insulating member 500 is brought into contact with or connected to first current collector 300, first current collector 300 and insulating member 500 can be fixed to each other. As with the second through-hole, third through-hole 501 serves to guide the gas discharged from power storage device 200 at an abnormality to a predetermined duct.

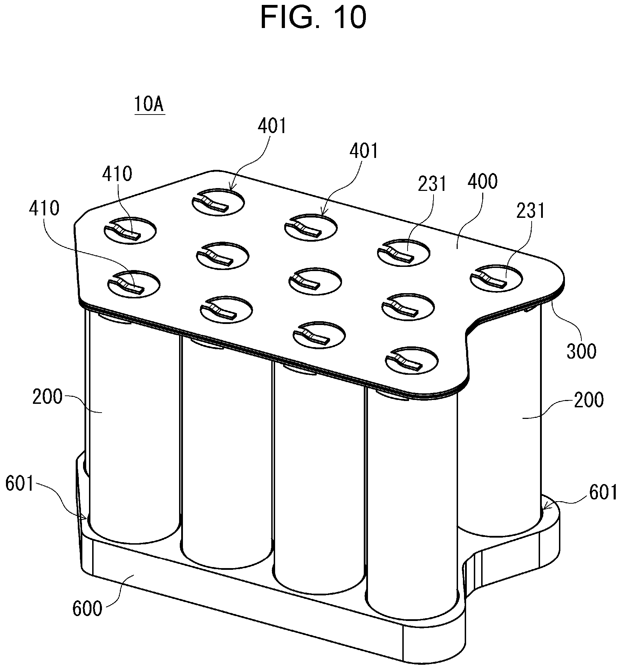

Fig. 10 is a perspective view of a power storage module according to another exemplary aspect of the present disclosure. Power storage module 10A has a similar structure to power storage module 10 described above except including holder 600 having a plurality of containers 601 that set and position bottoms 213 of a corresponding one of the plurality of power storage devices 200.

When flange part 212 positioned at one end of power storage device 200 is fixed by first current collector 300, and bottom 213 positioned at the other end of power storage device 200 is held or fixed by the holder, power storage module 10A with the plurality of power storage devices 200 integrated more firmly can be configured.

The plurality of power storage devices 200 are each fixed at one end to first current collector 300, so that containers 601 of holder 600 each may have a shallow depth to hold or fix bottom 213 of power storage device 200. For example, when power storage device 200 has an axial height (a distance from one end to the other end) indicated as H, the container of the holder may have a depth 20% or less of H. Although holder 600 may have a bottom surface flush with a bottom surface of the container as a whole, the bottom surface may be recessed except a part where the recess (container) for setting each power storage device 200 is formed, for weight reduction.

### <<Second exemplary aspect>>

A second exemplary aspect of the present disclosure will be described. A power storage module according to the present exemplary aspect includes a plurality of power storage devices and a first current collector holding the plurality of power storage devices. The plurality of power storage devices are held by the first current collector and integrated, so that a holder for holding the plurality of power storage devices is not essential. Thus, the holder can be greatly reduced in size or eliminated. The power storage module is thus remarkably improved in energy density per weight. As a result, a traveling distance of a vehicle equipped with the power storage module or the like can be easily extended, for example. The plurality of power storage devices may be held by the first current collector and fixed to the first current collector.

Altematively, the power storage module may include a holder for fixing or holding the plurality of power storage devices. For example, the power storage module may further include a holder having a plurality of containers for setting and positioning bottoms of a corresponding one of the plurality of power storage devices. This structure further enhances resistance to an external force such as vibration. Additionally, a heat absorbing agent or a heat dissipation member may be interposed between a pair of the power storage devices adjacent to each other.

The power storage devices each include a case having an opening, an electrode assembly including a first electrode and a second electrode that are housed in the case, and a sealing member sealing the opening. The case has a cylindrical shape, for example. The electrode assembly has a structure in which, for example, the first electrode and the second electrode are wound with a separator interposed therebetween. When each power storage device is a battery, one of the first electrode and the second electrode is a positive electrode, and the other is a negative electrode.

The case includes a tubular part, an enlarged diameter part continuous with one end of the tubular part and having an opening end corresponding to the opening, a bottom closing the other end of the tubular part, and a groove in an annular shape recessed inward in a radial direction of the tubular part, the groove being provided between the tubular part and the enlarged diameter part. The case is electrically connected to the first electrode. The enlarged diameter part has maximum outer diameter D1 larger than outer diameter D2 of the tubular part. When the tubular part has an outer diameter that is not strictly circular, a maximum outer diameter of the tubular part may be indicated as D2. The enlarged diameter part protrudes from the outer periphery of the tubular part when viewed from the bottom in the axial direction of the case.

The enlarged diameter part compresses the sealing member. For example, the enlarged diameter part compresses the sealing member together with the groove to form a caulked sealing structure.

The enlarged diameter part may be bent to form a first part disposed on an outer surface of a periphery (also referred to below as "periphery X") of the sealing member and a second part disposed on a side surface of periphery X. In this case, the first part and the groove compress periphery X of the sealing member in a direction in which an outer surface and an inner surface of the sealing member face each other (or in the axial direction of the case). In other words, the side surface of periphery X is a surface connecting the outer surface and the inner surface of the sealing member in periphery X.

The first current collector includes a plurality of first through-holes for setting and positioning a corresponding one of the plurality of power storage devices. That is, an arrangement of the plurality of power storage devices is determined by an arrangement of the first through-holes. In this case, a structure of the power storage module or the number of power storage devices connected in parallel can be easily changed only by changing the arrangement (layout) of the first through-holes in the first current collector. The first current collector is electrically connected to at least one of the enlarged diameter part and the groove. This structure causes the first current collector to be electrically connected to the case to be further electrically connected to the first electrode. The first current collector is a plate having conductivity, for example.

Here, a periphery (also referred to below as "periphery Y") surrounding the first through-hole of the first current collector is disposed overlapping a surface close to the enlarged diameter part in inner surfaces of the groove. The surface close to the enlarged diameter part in the inner surfaces of the groove here means a surface extending from a part having the smallest diameter in the inner surfaces of the groove (deepest part of the groove) to the enlarged diameter part. This structure enables the case to be brought into contact with the first current collector while the case is inserted into the first through-hole. This contact enables suppressing positional displacement between the power storage device and the first current collector. The tubular part may have a maximum outer diameter larger than a minimum outer diameter of the groove, and thus periphery Y of the first current collector may not overlap a surface close to the tubular part in the inner surfaces of the groove. The surface close to the tubular part in the inner surfaces of the groove here means a surface extending from the part having the smallest diameter in the inner surfaces of the groove to the tubular part. This structure enables suppressing an interference of periphery Y of the first current collector with the tubular part when the power storage device is inserted into the first through-hole. Periphery Y of the first current collector may have a retainer suitable for receiving the inner surface of the groove, for example. The retainer supports the enlarged diameter part by receiving the inner surface of the groove.

The retainer may include a first wall extending toward the bottom of the case and facing the second part, and an inner flange part continuous with the first wall and supporting the surface close to the enlarged diameter part in the inner surfaces of the groove. The second part may be brought into contact with the first wall of the first current collector. At this time, the first wall suppresses displacement of the enlarged diameter part in a direction perpendicular to the axis of the case. The inner flange part suppresses displacement of the enlarged diameter part in the axial direction of the case. This structure suppresses swinging of the case, and thus the power storage device is more stably positioned. In other words, the retainer is a recess or a step formed in a surface of the first current collector, the surface facing the sealing member, and at least a part of the enlarged diameter part is set in the recess or the step.

The retainer may further include a second wall continuous with the inner flange part, the second wall extending toward the bottom of the case and facing the tubular part. The second wall may have a function of pressing the tubular part by bringing the second wall into contact with the tubular part. The second wall as described above more strictly suppresses the displacement of the enlarged diameter part in the direction perpendicular to the axis of the case (a radial direction of the tubular part). For example, inclination of the power storage device with respect to the first current collector can be restricted. This structure further suppresses the swinging of the case, and thus the power storage device is firmly fixed at a predetermined position.

The retainer, the first wall, or a connected body of the first wall and the second wall may be a wall in a ring shape surrounding the enlarged diameter part and/or the tubular part, for example. The wall also may have a tongue shape formed intermittently in a circumferential direction of the enlarged diameter part, or a shape in which a part of the wall in a ring shape is cut out in the circumferential direction. Alternatively, the retainer may be formed by connecting a separate member to periphery Y of the first through-hole.

The plurality of power storage devices may be held by the first current collector in any manner. For example, the first part of the enlarged diameter part may be flush with the surface (particularly, the outer surface) of the first current collector. This kind of structure improves storage capacity for the second current collector, the insulating member, and the like. However, the outer surface of the first part and the outer surface of the first current collector do not need to be exactly equal in height in the axial direction of the case, and may be deviated from each other by 2 mm or less.

The power storage devices each may be more firmly fixed to the first current collector by joining periphery Y of the first current collector to the enlarged diameter part. When the first part of the enlarged diameter part and the surface of the first current collector are flush with each other, a bent part at the boundary between the first part and the second part may be welded to periphery Y of the first current collector (or a part adjacent to the first part of the retainer). This structure causes the power storage device to be more firmly fixed to the first current collector. Periphery Y is then welded in a region that may be the entire circumference of periphery Y (or the bent part), or may include partial regions formed by being scattered in a circumferential direction of periphery Y. When the region in the entire circumference is welded, connection resistance between the case and the first current collector can be reduced. Additionally, integration between the power storage device and the first current collector can be enhanced. When scattered points are welded, a stress at a joint between the inner flange part and the bent part is smaller than that when the entire circumference of periphery Y is welded even when a force acts on the power storage device or the first current collector to cause minute displacement. Thus, distortion of the entire power storage module can be reduced. The power storage module of the present disclosure may be configured such that periphery Y of the first current collector is joined to the inner surface of the groove, the inner surface being close to the enlarged diameter part.

The plurality of power storage devices may be arranged side by side such that axes of electrode assemblies are directed in the same direction and cases each have the opening disposed on the same side. More specifically, the plurality of power storage devices may be arranged such that the axes of the electrode assemblies are substantially parallel to each other and have respective first end surfaces substantially flush with each other and respective second end surfaces substantially flush with each other, and tubular parts of the respective cases have side surfaces adjacent to each other.

The power storage module may further include a second current collector electrically connected to the second electrode of each electrode assembly. The first current collector and the second current collector may have outer shapes in a plane that substantially correspond to each other, and one of the first current collector and the second current collector may be larger than the other.

Between the first current collector and the second current collector, an insulating member may be interposed. At this time, a first surface of the insulating member may be brought into contact with the second current collector, and a second surface located opposite to the first surface may be brought into contact with the first current collector. When both the first and second current collectors are disposed with the insulating member interposed therebetween, both the first current collector and the second current collector can be disposed on one of ends (specifically, an end having the sealing member) of the power storage device. Thus, no current collecting structure is required to be provided on the other end (specifically, the end closer to a bottom) of the power storage device. This structure enables reducing a space required by the power storage device in the axial direction, and thus is advantageous for improving the power storage module in volume energy density. Additionally, displacement of the first current collector and the second current collector can be easily restricted. When a material having high rigidity is used for the insulating member, a current collecting member including the first and second current collectors is increased in mechanical strength.

Although a structure of the sealing member is not particularly limited, the structure may include a sealing plate, and a gasket insulating the sealing plate from the enlarged diameter part, for example. When the sealing member having a structure as described above is used, the sealing plate can be electrically connected to the second electrode of the electrode assembly.

The second current collector may have a second through-hole in a region facing the sealing plate, or may have a tongue-shaped lead extending from the periphery surrounding the second through-hole of the second current collector toward the inside of the second through-hole. When the tongue-shaped lead is electrically connected to the sealing plate, the second current collector is electrically connected to the sealing plate.

Although a type of the power storage device is not particularly limited, examples the power storage device include a primary battery, a secondary battery, a lithium ion capacitor, an electric double layer capacitor, and a solid electrolytic capacitor. Among them, a non-aqueous electrolyte secondary battery (including an all-solid-state battery) such as a lithium ion secondary battery having a high energy density can be suitably used.

Although the power storage module according to the second exemplary aspect of the present disclosure will be specifically described below with reference to the drawings, the present disclosure is not limited the following.

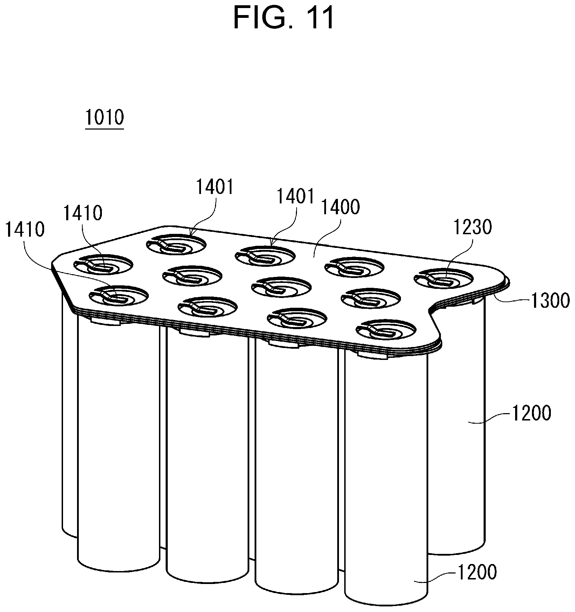

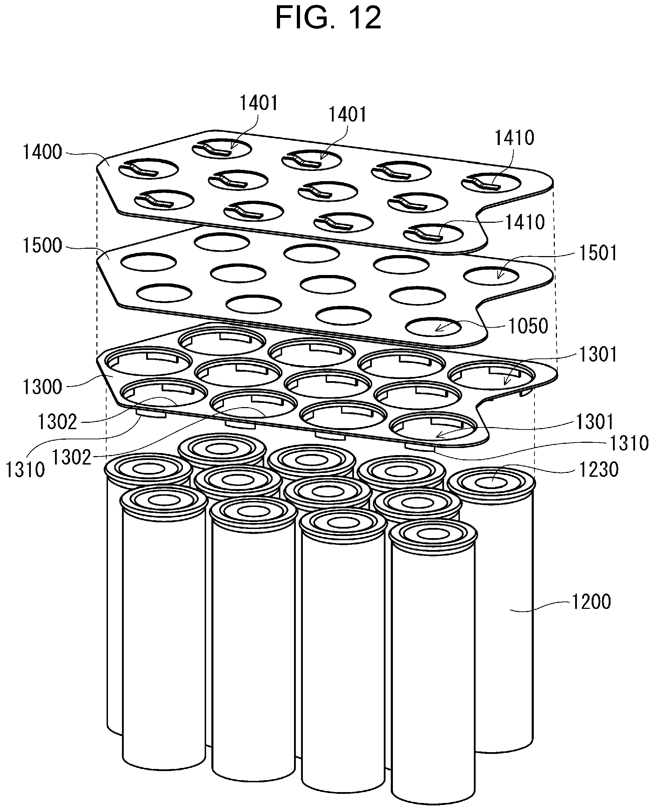

Fig. 11 is a perspective view of a power storage module according to an exemplary aspect of the present disclosure. Fig. 12 is an exploded perspective view of the power storage module of Fig. 11. Power storage module 1010 includes a plurality of power storage devices 1200 each having a cylindrical shape, and first current collector 1300 and second current collector 1400 that hold the plurality of power storage devices 1200. First current collector 1300 also serves to integrate the plurality of power storage devices 1200. The plurality of power storage devices 1200 may be arranged side by side such that axes of electrode assemblies thereof are directed in the same direction and cases each have an opening disposed on the same side.

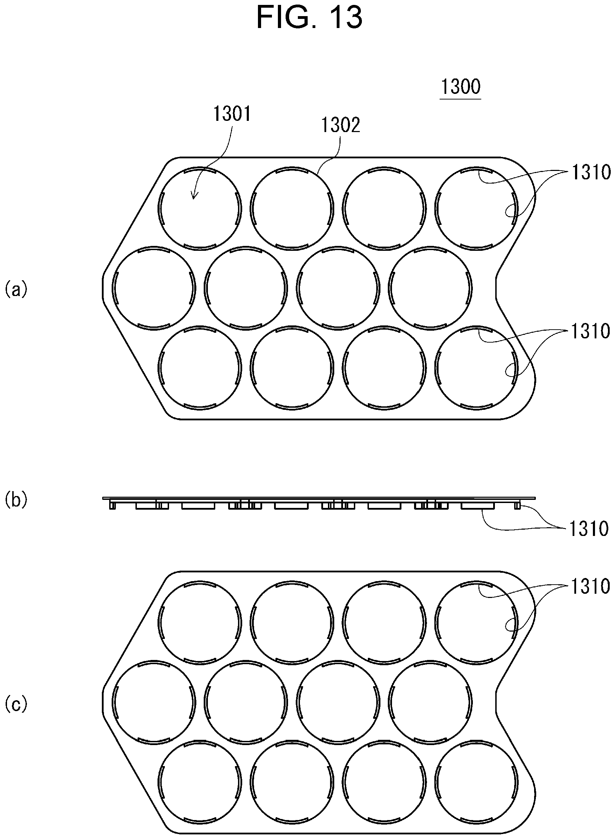

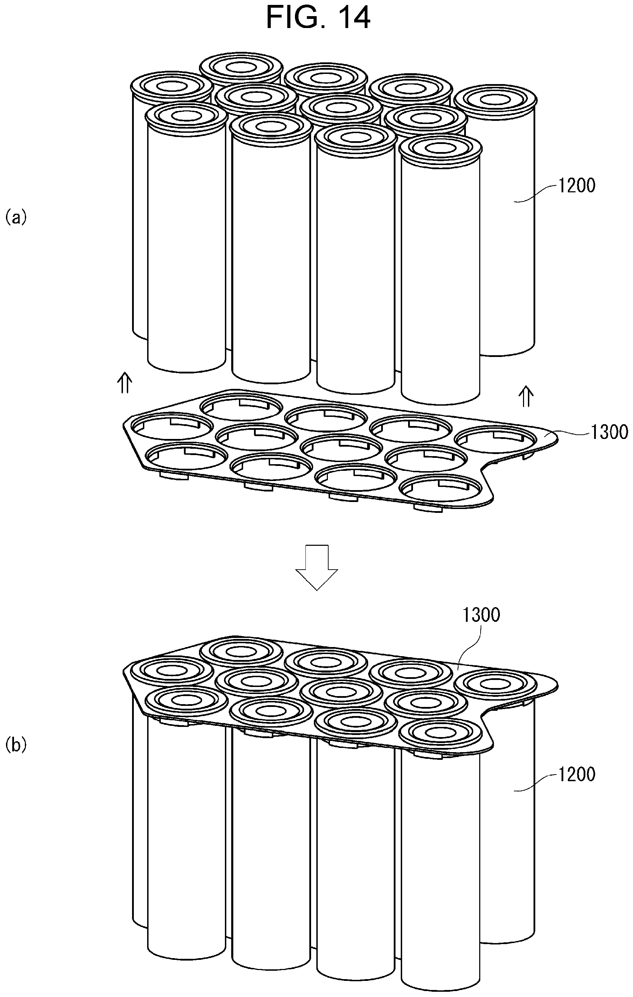

Fig. 13 includes a plan view (a), a side view (b), and a bottom view (c), of a first current collector. Fig. 14 includes a perspective view (a) of the plurality of power storage devices before being held by the first current collector, and a perspective view (b) of the plurality of power storage devices held by the first current collector. First current collector 1300 has a plurality of first through-holes 1301 through which a corresponding one of the plurality of power storage devices 1200 are inserted and positioned. Thus, an arrangement of the plurality of power storage devices 1200 is easily determined by an arrangement of first through-holes 1301. Each power storage device 1200 is inserted into the corresponding one of first through-holes 1301 from a bottom side and positioned. Although an example is illustrated in which twelve power storage devices are arranged in a honeycomb shape (zigzag shape) to have a closest-packed filling, the arrangement, number, and the like of the power storage devices are not particularly limited. First current collector 1300 can be obtained by processing a metal sheet by punching, pressing, or the like.

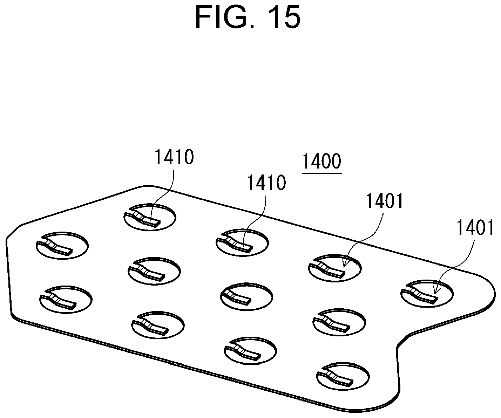

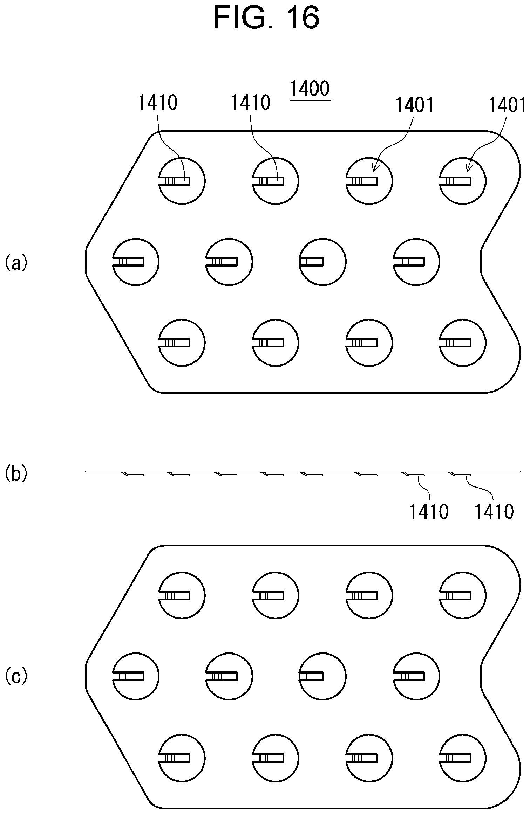

Fig. 15 is a perspective view of a second current collector, and Fig. 16 includes a plan view (a), a side view (b), and a bottom view (c), of a second current collector. Second current collector 1400 is a plate-like member having second through-holes 1401 at positions corresponding to positions of corresponding one of the plurality of power storage devices 1200. Second current collector 1400 can be obtained by processing a metal sheet by punching, pressing, or the like.

Second current collector 1400 is disposed overlapping first current collector 1300. Specifically, both first current collector 1300 and second current collector 1400 are disposed close to a sealing member in power storage device 1200. Thus, no current collecting structure needs to be provided close to a bottom of power storage device 1200, and thus reducing a space required by power storage device 1200 in the axial direction .

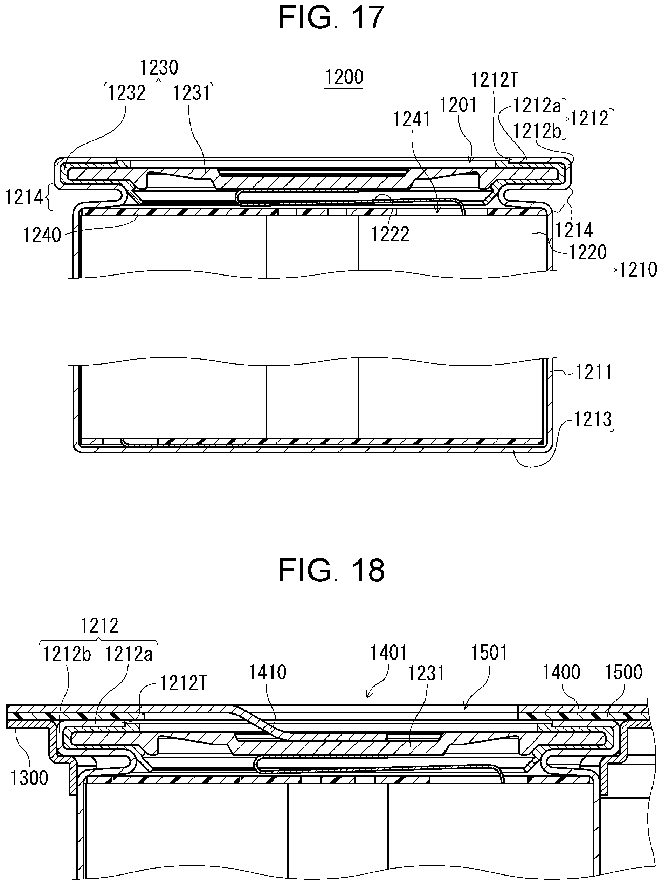

Fig. 17 is a sectional view illustrating structure of an example of power storage device 1200. Power storage device 1200 includes case 1210 having a cylindrical shape and opening 1201, electrode assembly 1220 including a first electrode and a second electrode housed in case 1210, and sealing member 1230 sealing opening 1201.

Case 1210 includes tubular part 1211 in a cylindrical shape, an enlarged diameter part 1212 continuous with one end of tubular part 1211 and having opening end 1212T corresponding to opening 1201, bottom 1213 closing the other end of tubular part 1211, and groove 1214 in an annular shape recessed inward in a radial direction of tubular part 1211, groove 1214 being provided between the tubular part and the enlarged diameter part. Enlarged diameter part 1212 is an annular part having outer diameter D1 larger than outer diameter D2 of tubular part 1211.

Sealing member 1230 includes sealing plate 1231 and gasket 1232 insulating sealing plate 1231 from enlarged diameter part 1212. Sealing plate 1231 may also include a valve body having a circular outer shape, a metal sheet disposed closer to the inside of a battery than the valve body and connected to a central part of the valve body, and an insulating member in an annular shape interposed between outer peripheral parts of the valve body and the metal sheet. The valve body then has an inclined region that continuously decreases in thickness in a radial direction from its inner peripheral side to outer peripheral side. The metal sheet may be at least partially formed thin, and may have a vent hole (not illustrated). When an internal pressure of the battery abnormally increases, the valve body pulls the metal sheet connected to the central part of the valve body outward by receiving a gas pressure from the vent hole, and when the intemal pressure of the battery reaches a predetermined value, a thin part of the metal sheet breaks and a current path between the valve body and the metal sheet is interrupted.

Enlarged diameter part 1212 is bent to form first part 1212a disposed on an outer surface of periphery X (gasket 1232 disposed in periphery X) of sealing member 1230 and second part 1212b disposed on a side surface of periphery X of sealing member 1230. First part 1212a compresses gasket 1232 disposed in periphery X of sealing member 1230 together with groove 1214 in a direction in which an outer surface and an inner surface of the sealing member face each other. This structure maintains sealability of the inside of case 1210.

Between electrode assembly 1220 and sealing member 1230, intemal insulating plate 1240 is disposed to prevent electrode assembly 1220 from coming into contact with sealing member 1230. Internal insulating plate 1240 is provided with lead hole 1241 of a predetermined size. Lead 1222 led out from the second electrode constituting electrode assembly 1220 passes through lead hole 1241, and is electrically connected to an inner surface of sealing plate 1231. Thus, sealing plate 1231 has the same polarity as that of the second electrode. In contrast, the first electrode constituting electrode assembly 1220 is electrically connected to case 1210. Thus, case 1210 has the same polarity as that of the first electrode.

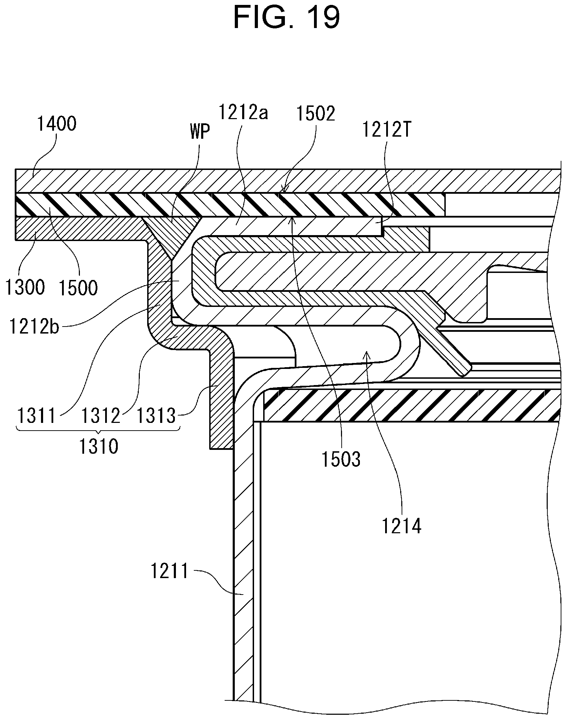

Fig. 18 is a sectional view of a main part of power storage device 1200 held by first current collector 1300. Fig. 19 is an enlarged view of a main part of Fig. 18, and illustrates a weld between periphery 1302 (periphery Y) surrounding first through-hole 1301 of first current collector 1300 and enlarged diameter part 1212 of case 1210.

Retainer 1310 provided in periphery Y includes a first wall 1311 extending toward bottom 1213 of case 1210 and facing second part 1212b, inner flange part 1312 continuous with first wall 1311, and second wall 1313 continuous with inner flange part 1312. Inner flange part 1312 supports an inner surface of groove 1214, the inner surface being close to enlarged diameter part 1212. Second wall 1313 further extends toward bottom 1213 of case 1210 and faces tubular part 1211. First wall 1311 is at least partially in contact with second part 1212b to suppress displacement of enlarged diameter part 1212 in a direction perpendicular to the axis of case 1210. Additionally, inner flange part 1312 suppresses displacement of enlarged diameter part 1212 in the axial direction of case 1210. Second wall 1313 is at least partially in contact with tubular part 1211 to suppress displacement of tubular part 1211 in the direction perpendicular to the axial direction of case 1210. This structure enables the power storage device to be more firmly held while suppressing complication of shapes of insulating member 1500 and second current collector described later.

Second through-hole 1401 of second current collector 1400 is located immediately above sealing member 1230 of each of the plurality of power storage devices 1200. For example, second through-hole 1401 serves to guide gas discharged from power storage device 1200 at an abnormality to a predetermined duct. Tongue-shaped lead 1410 is led out from a periphery of second through-hole 1401 toward the inside of the second through-hole. Tongue-shaped lead 1410 is electrically connected to an outer surface of sealing plate 1231. Thus, second current collector 1400 has the same polarity as sealing plate 1231 and the second electrode.

Fig. 19 illustrates an example of weld WP when enlarged diameter part 1212 and periphery Y of first current collector 1300 are welded with a laser from above enlarged diameter part 1212. When enlarged diameter part 1212 and first through-hole 1301 are viewed in the axial direction of case 1210, enlarged diameter part 1212 has a diameter larger than an inner diameter of inner flange part 1312. Thus, enlarged diameter part 1212 and retainer 1310 of first current collector 1300 have an overlapping region. First part 1212a is substantially flush with a main surface of first current collector 1300. Enlarged diameter part 1212 and periphery Y (retainer 1310) are adjacent to each other at a part joined by welding. This structure causes the plurality of power storage devices 1200 to be firmly fixed to and integrated with first current collector 1300. Enlarged diameter part 1212 and periphery Y (retainer 1310) may be at least partially welded.

Weld WP is not limited to the above position, and for example, inner flange part 1312 of retainer 1310 and a surface of groove 1214, the surface being close to the enlarged diameter part, may be welded.

As illustrated in Fig. 12 and the like, insulating member 1500 is interposed between first current collector 1300 and second current collector 1400. Insulating member 1500 is a plate-like member having first surface 1502 and second surface 1503 located opposite to first surface 1502. Insulating member 1500 also has third through-holes 1501 at positions corresponding to sealing members 1230 of corresponding one of the plurality of power storage devices 1200. First surface 1502 of insulating member 1500 is in contact with second current collector 1400. Then, second surface 1503 is in contact with first current collector 1300 and first part 1212a of enlarged diameter part 1212. This structure enables stacking insulating member 1500, first current collector 1300, and second current collector 1400 with almost no gap. Thus, power storage device 1200 can be more firmly held. When insulating member 1500 is brought into contact with or connected to first current collector 1300, first current collector 1300 and insulating member 1500 can be fixed to each other. At this time, insulating member 1500 and first current collector 1300 may be fastened with a screw or the like. As with the second through-hole, third through-hole 1501 serves to guide the gas discharged from power storage device 1200 at an abnormality to a predetermined duct.

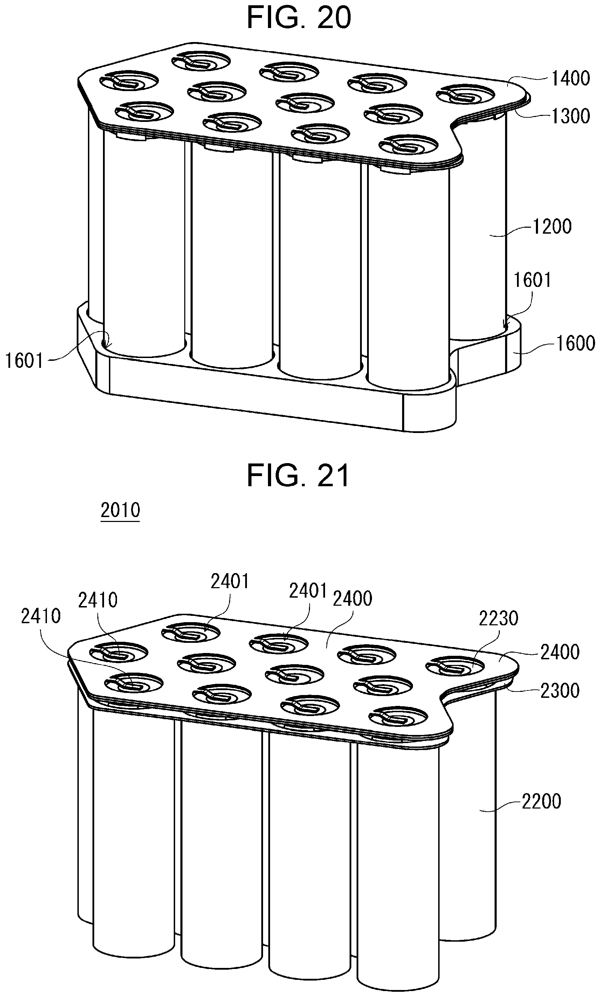

Fig. 20 is a perspective view of a power storage module according to another exemplary aspect of the present disclosure. Power storage module 1010A has a similar structure to power storage module 1010 described above except including holder 1600 having a plurality of containers 1601 that set and position bottoms 1213 of a corresponding one of the plurality of power storage devices 1200.

When enlarged diameter part 1212 positioned at one end of power storage device 1200 is fixed by first current collector 1300, and bottom 1213 positioned at the other end of power storage device 1200 is held or fixed by the holder, power storage module 1010A with the plurality of power storage devices 1200 integrated more firmly can be configured.

The plurality of power storage devices 1200 are each fixed at one end to first current collector 1300, so that containers 1601 of holder 1600 each may have a shallow depth to hold or fix bottom 1213 of power storage device 1200. For example, when power storage device 1200 has an axial height (a distance from one end to the other end) indicated as H, the container of the holder may have a depth 20% or less of H. Although holder 1600 may have a bottom surface flush with a bottom surface of the container as a whole, the bottom surface may be recessed except a part where the recess (container) for setting each power storage device 1200 is formed, for weight reduction.

### DESCRIPTION OF EMBODIMENTS OF THE CLAIMED INVENTION

A first exemplary embodiment of the claimed invention will be described. A power storage module according to the present exemplary embodiment includes a plurality of power storage devices and a first current collector holding the plurality of power storage devices. The plurality of power storage devices are held by the first current collector and integrated, so that a holder for holding the plurality of power storage devices is not essential. Thus, the holder can be greatly reduced in size or eliminated. The power storage module is thus remarkably improved in energy density per weight. As a result, a traveling distance of a vehicle equipped with the power storage module or the like can be easily extended, for example. The plurality of power storage devices may be held by the first current collector and fixed to the first current collector.

Altematively, the power storage module may include a holder for fixing or holding the plurality of power storage devices. For example, the power storage module may further include a holder having a plurality of containers for setting and positioning bottoms of a corresponding one of the plurality of power storage devices. This structure further enhances resistance to an external force such as vibration. Additionally, a heat absorbing agent or a heat dissipation member may be interposed between a pair of the power storage devices adjacent to each other.

The power storage devices each include a case having an opening, an electrode assembly including a first electrode and a second electrode that are housed in the case, and a sealing member sealing the opening. The case has a cylindrical shape, for example. The electrode assembly has a structure in which, for example, the first electrode and the second electrode are wound with a separator interposed therebetween. When each power storage device is a battery, one of the first electrode and the second electrode is a positive electrode, and the other is a negative electrode.

The case includes a tubular part, a reduced diameter part continuous with one end of the tubular part and having an opening end corresponding to the opening, a bottom closing the other end of the tubular part, and a groove in an annular shape recessed inward in a radial direction of the tubular part, the groove being provided between the tubular part and the reduced diameter part. The case is electrically connected to the first electrode. The reduced diameter part has maximum outer diameter D3 smaller than outer diameter D4 of the tubular part, and the groove has minimum outer diameter D5 smaller than maximum outer diameter D3 of the reduced diameter part. When the tubular part has an outer periphery that is not strictly circular, a maximum outer diameter of the tubular part may be indicated as D4. The tubular part protrudes from the outer periphery of the reduced diameter part when viewed from the sealing member in the axial direction of the case.

The reduced diameter part compresses the sealing member. For example, the reduced diameter part compresses a periphery (also referred to below as "periphery X") of the sealing member together with the groove in the axial direction of the case to form a caulked sealing structure.

The reduced diameter part is bent to form a first part disposed on an outer surface of periphery X of the sealing member and a second part disposed on a side surface of periphery X. In this case, the first part and the groove compress periphery X of the sealing member in a direction in which an outer surface and an inner surface of the sealing member face each other. In other words, the side surface of periphery X is a surface connecting the outer surface and the inner surface of the sealing member.

The first current collector includes a plurality of first through-holes for setting and positioning a corresponding one of the plurality of power storage devices. That is, an arrangement of the plurality of power storage devices is determined by an arrangement of the first through-holes. In this case, a structure of the power storage module or the number of power storage devices connected in parallel can be easily changed only by changing the arrangement (layout) of the first through-holes in the first current collector. The first current collector is electrically connected to at least one of the groove and the reduced diameter part. This structure causes the first current collector to be electrically connected to the case to be further electrically connected to the first electrode. The first current collector is a plate having conductivity, for example.

Here, the first current collector is disposed overlapping a surface close to the tubular part in inner surfaces of the groove. For example, a periphery (also referred to below as "periphery Y") surrounding the first through-hole of the first current collector is disposed overlapping the surface close to the tubular part in the inner surfaces of the groove. The surface close to the tubular part in the inner surfaces of the groove here means a surface extending from a part having the smallest diameter in the inner surfaces of the groove (deepest part of the groove) to the tubular part. This structure enables the case to be brought into contact with the first current collector while the case is inserted into the first through-hole. This contact enables suppressing positional displacement between the power storage device and the first current collector. The first current collector may not overlap a surface close to the reduced diameter part in the inner surfaces of the groove. The surface close to the reduced diameter part in the inner surfaces of the groove here means a surface extending from the part having the smallest diameter in the inner surfaces of the groove to the reduced diameter part. This structure enables suppressing an interference of periphery Y of the first current collector with the reduced diameter part when the power storage device is inserted into the first through-hole. Periphery Y may have a retainer that receives a bent part at the boundary between the tubular part and the groove. Receiving and supporting such a bent part with the retainer more facilitates positioning and fixing of the power storage device.

The retainer may have an inner flange part that is in contact with the bent part at the boundary between the tubular part and the groove. The inner flange part may have an annular shape, a shape obtained by removing a part from a ring, or a shape formed by a plurality of engagement pieces as a whole. Although the inner flange part is not particularly limited in shape, the inner flange part has a shape protruding toward the opening of the case and extending inward in a radial direction of the first through-hole, for example. In other words, the retainer is a recess or a step formed in a surface of the first current collector, the surface facing the bottom of the case, and at least a part of the tubular part is set in the recess or the step.

The groove includes an upper ring part continuous with the second part of the reduced diameter part, a lower ring part continuous with the tubular part, and a groove bottom connecting the upper ring part and the lower ring part. When viewed from the axial direction of the case, a part of the lower ring part is shielded by the upper ring part (reduced diameter part), and a remaining part thereof protrudes from the upper ring part toward the outside of the case in the radial direction. The inner flange part extends to cover at least a part of a region of the lower ring that is not shielded by the upper ring part (reduced diameter part). The inner flange part suppresses displacement of the power storage device in the axial direction of the case.

The inner flange part may be provided to cover an end of the tubular part, the end being close to the boundary between the tubular part and the groove, in an outer surface of the bent part at the boundary. This structure further facilitates positioning and fixing of the power storage device. For example, the end of the tubular part is restricted by the inner flange part, so that swinging of the power storage device can be easily suppressed.

The retainer may include a first wall extending toward the bottom of the case and facing the second part, and the inner flange part may be provided continuously with the first wall. The first current collector is improved in mechanical strength by providing the first wall, so that the entire power storage module is improved in structural strength.

The retainer may include a first wall extending toward the bottom of the case and facing the second part and the tubular part, and a second wall continuous with the first wall and extending in a direction opposite to a direction in which the first wall extends and facing the tubular part, and the inner flange part may be provided continuously with the second wall. In this case, the tubular part may be brought into contact with the second wall. As a result, a larger part of the tubular part may be restricted by the second wall, and the second wall may have a function of pressing the tubular part. The second wall as described above more strictly suppresses displacement of the power storage device in a direction perpendicular to the axial direction of the case. This structure further suppresses the swinging of the case, and thus the power storage device is firmly fixed at a predetermined position. Providing the second wall further improves the first current collector in mechanical strength. Even when the second wall has no function of pressing the tubular part, the second wall enables preventing the power storage device from inclining with respect to the first current collector when being only provided facing an outer peripheral surface of the tubular part.

The retainer, the first wall, or a connected body of the first wall and the second wall may be a wall in a ring shape surrounding the reduced diameter part and/or the tubular part, for example. The wall also may have a tongue shape formed intermittently in a circumferential direction of the reduced diameter part, or a shape in which a part of the wall in a ring shape is cut out in the circumferential direction. Alternatively, the retainer may be formed by connecting a separate member to the periphery of the first through-hole.

The plurality of power storage devices may be held with respect to the first current collector in any manner. Then, when the first wall is provided, the first part of the reduced diameter part and a main surface of the first current collector can be flush with each other by adjusting height of the first wall. This kind of structure improves storage capacity for an insulating member, a second current collector, and the like described later. As a result, the entire power storage module has enhanced compactness and improved structural strength. However, the outer surface of the first part and the outer surface of the first current collector do not need to be exactly equal in height in the axial direction of the case.

The power storage devices each may be more firmly fixed to the first current collector by joining periphery Y of the first current collector to the case. For example, the bent part at the boundary between the tubular part and the groove may be welded to the inner flange part. This structure causes the power storage device to be more firmly fixed to the first current collector. When the inner flange part is provided on the entire circumference of periphery Y, the bent part at the boundary between the tubular part and the groove may be welded to the inner flange part over the entire circumference of the bent part or at scattered points in the circumferential direction of the bent part. Welding over the entire circumference enables enhancing integration between the power storage device and the first current collector. Additionally, connection resistance between the case and the first current collector can be reduced. When the scattered points are welded, a stress at a joint between the inner flange part and the bent part is smaller than that when the entire circumference of periphery Y is welded even when a force acts on the power storage device or the first current collector to cause minute displacement. Thus, distortion of the entire power storage module can be reduced.

The plurality of power storage devices may be arranged side by side such that axes of electrode assemblies are directed in the same direction and cases each have the opening disposed on the same side. More specifically, the plurality of power storage devices may be arranged such that axes of the electrode assemblies are substantially parallel to each other and have respective first end surfaces substantially flush with each other and respective second end surfaces substantially flush with each other, and tubular parts of the respective cases have side surfaces adjacent to each other.

The power storage module may further include a second current collector electrically connected to the second electrode of each electrode assembly. The first current collector and the second current collector may have outer shapes in a plane that substantially correspond to each other, and one of the first current collector and the second current collector may be larger than the other.

Between the first current collector and the second current collector, an insulating member may be interposed. At this time, a first surface of the insulating member may be brought into contact with the second current collector, and a second surface located opposite to the first surface may be brought into contact with the first current collector. When both the first and second current collectors are disposed with the insulating member interposed therebetween, both the first current collector and the second current collector can be disposed on one of ends (specifically, an end having the sealing member) of the power storage device. Thus, no current collecting structure is required to be provided on the other ends (specifically, the end closer to a bottom) of the power storage device. This structure enables reducing a space required by the power storage device in the axial direction, and thus is advantageous for improving the power storage module in volume energy density. Additionally, displacement of the first current collector and the second current collector can be easily restricted. When a material having high rigidity is used for the insulating member, a current collecting member including the first and second current collectors is increased in mechanical strength.

Although a structure of the sealing member is not particularly limited, the structure may include a sealing plate having conductivity and a gasket insulating the sealing plate from the reduced diameter part, for example. When the sealing member having a structure as described above is used, the sealing plate can be electrically connected to the second electrode of the electrode assembly.

The second current collector may have a second through-hole in a region facing the sealing plate, or may have a tongue-shaped lead extending from the periphery surrounding the second through-hole of the second current collector toward the inside of the second through-hole. When the tongue-shaped lead is electrically connected to the sealing plate, the second current collector is electrically connected to the sealing plate.

Although a type of the power storage device is not particularly limited, examples the power storage device include a primary battery, a secondary battery, a lithium ion capacitor, an electric double layer capacitor, and a solid electrolytic capacitor. Among them, a non-aqueous electrolyte secondary battery (including an all-solid-state battery) such as a lithium ion secondary battery having a high energy density can be suitably used.

Although the power storage module according to an exemplary embodiment of the claimed invention will be specifically described below with reference to the drawings, the claimed invention is not limited the following.

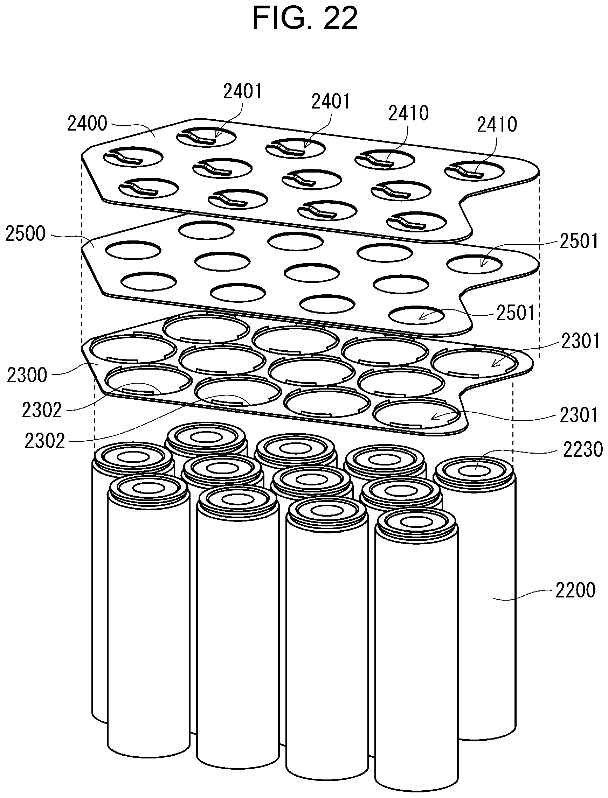

Fig. 21 is a perspective view of a power storage module according to an exemplary embodiment of the claimed invention. Fig. 22 is an exploded perspective view of the power storage module of Fig. 21. Power storage module 2010 includes a plurality of power storage devices 2200 each having a cylindrical shape, and first current collector 2300 and second current collector 2400 that hold the plurality of power storage devices 2200. First current collector 2300 also serves to integrate the plurality of power storage devices 2200. The plurality of power storage devices 2200 may be arranged side by side such that axes of electrode assemblies thereof are directed in the same direction and cases each have an opening disposed on the same side.

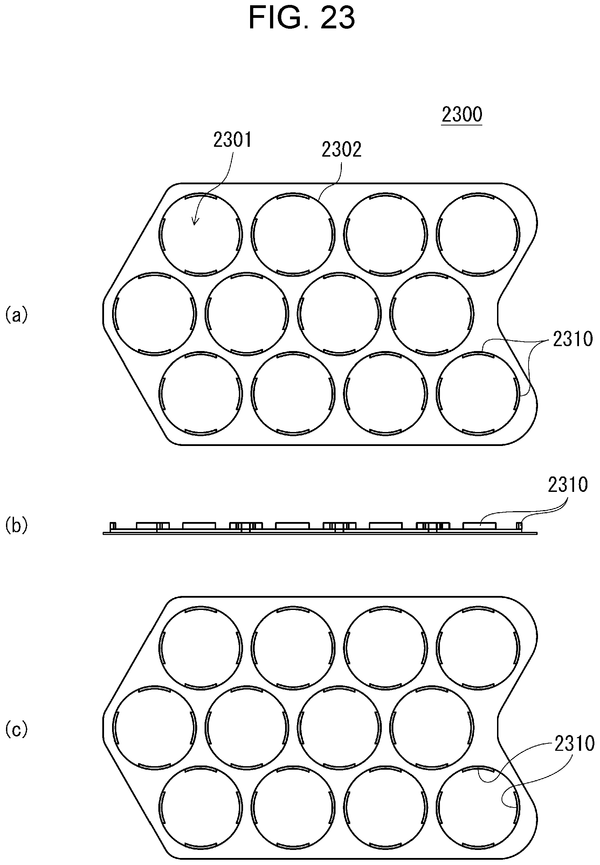

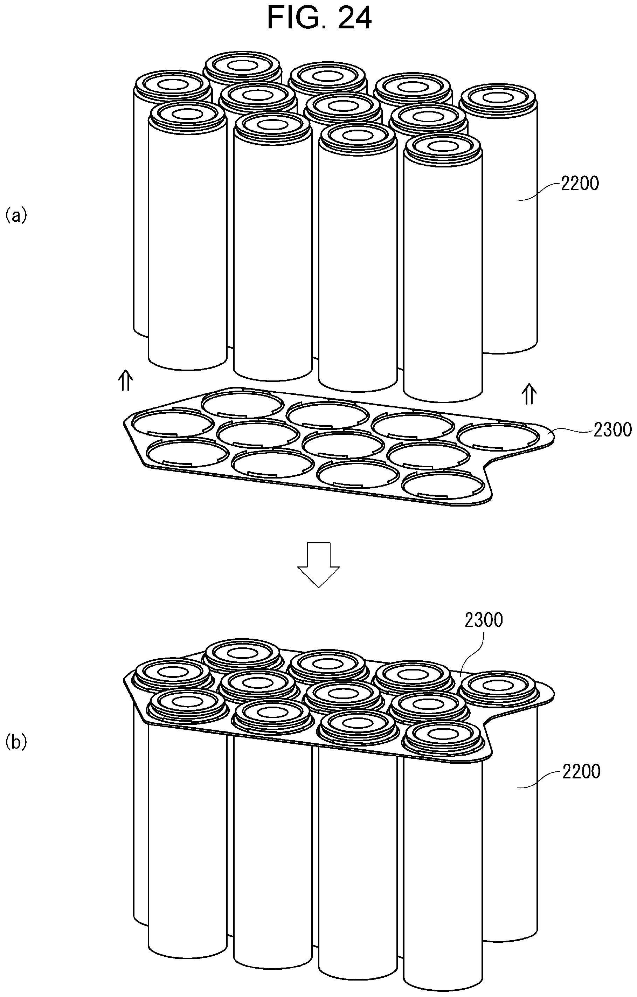

Fig. 23 includes a plan view (a), a side view (b), and a bottom view (c), of a first current collector. Fig. 24 includes a perspective view (a) of a plurality of power storage devices before being held by the first current collector, and a perspective view (b) of the plurality of power storage devices held by the first current collector. First current collector 2300 has a plurality of first through-holes 2301 through which a corresponding one of the plurality of power storage devices 2200 are inserted and positioned. Thus, an arrangement of the plurality of power storage devices 2200 is easily determined by an arrangement of first through-holes 2301. Each power storage device 2200 is inserted into the corresponding one of first through-holes 2301 from a bottom side and positioned. Although an example is illustrated in which twelve power storage devices are arranged in a honeycomb shape (zigzag shape) to have a closest-packed filling, the arrangement, number, and the like of the power storage devices are not particularly limited. First current collector 2300 can be obtained by processing a metal sheet by punching, pressing, or the like.

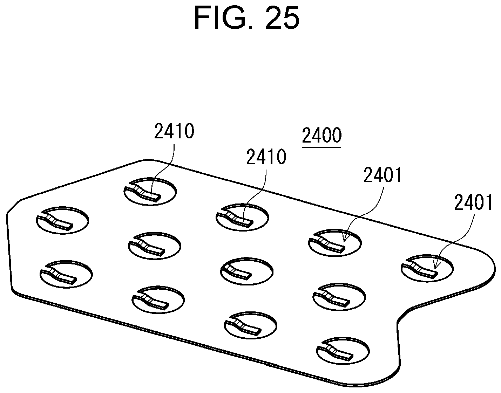

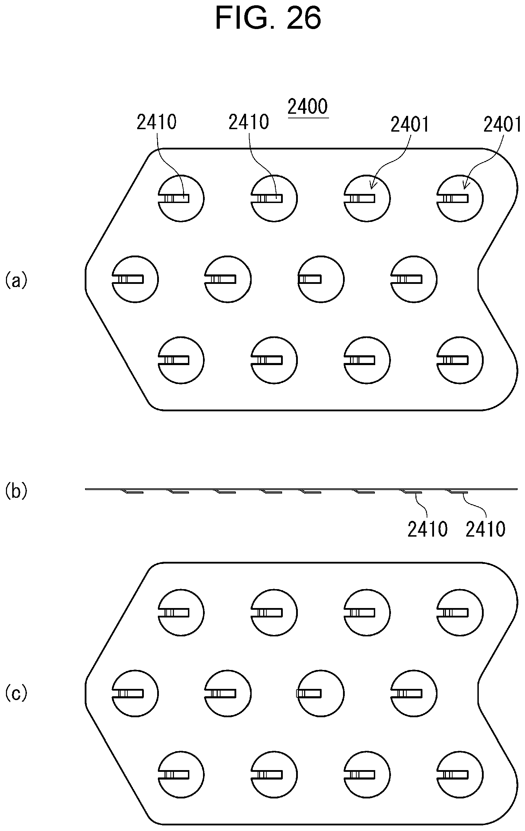

Fig. 25 is a perspective view of a second current collector, and Fig. 26 includes a plan view (a), a side view (b), and a bottom view (c), of the second current collector. Second current collector 2400 is a plate-like member having second through-holes 2401 at positions corresponding to positions of corresponding one of the plurality of power storage devices 2200. Second current collector 2400 can be obtained by processing a metal sheet by punching, pressing, or the like.

Second current collector 2400 is disposed overlapping first current collector 2300. Specifically, both first current collector 2300 and second current collector 2400 are disposed close to sealing member 2230 in power storage device 2200. Thus, no current collecting structure needs to be provided close to bottom 2213 of power storage device 2200, and thus reducing a space required by the power storage device 2200 in the axial direction.

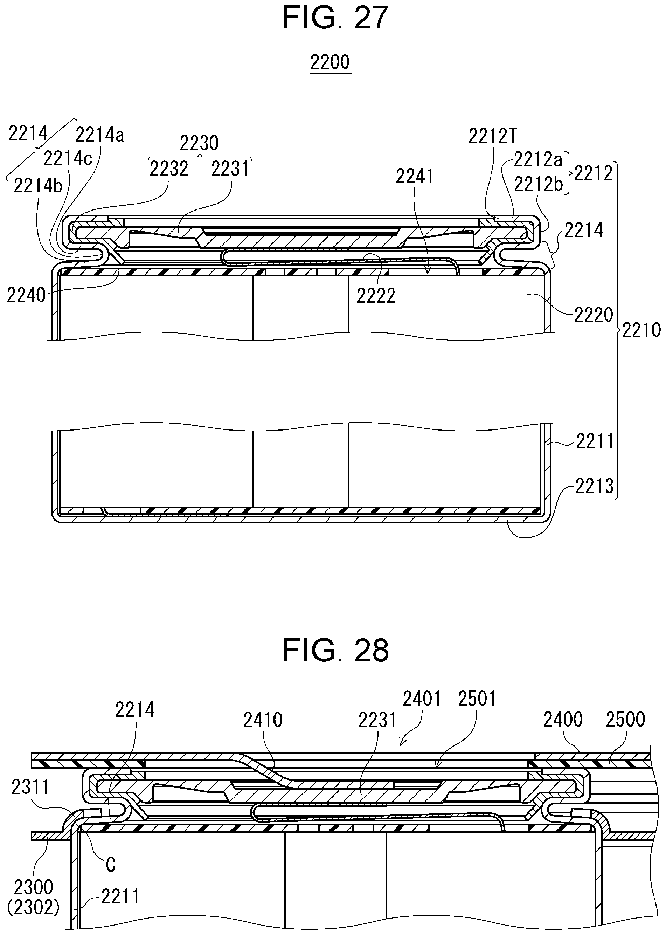

Fig. 27 is a sectional view illustrating a structure of an example of power storage device 2200. Power storage device 2200 includes case 2210 having a cylindrical shape and opening 2201, electrode assembly 2220 including a first electrode and a second electrode housed in case 2210, and sealing member 2230 sealing opening 2201.

Case 2210 includes tubular part 2211 in a cylindrical shape, reduced diameter part 2212 continuous with one end of tubular part 2211 and having opening end 2212T corresponding to opening 2201, bottom 2213 closing the other end of tubular part 2211, and groove 2214 in an annular shape recessed inward in a radial direction of tubular part 2211, groove 2214 being provided between tubular part 2211 and reduced diameter part 2212. Reduced diameter part 2212 is an annular part having maximum outer diameter D3 smaller than outer diameter D4 of tubular part 2211 in a cylindrical shape.

Reduced diameter part 2212 is bent to form first part 2212a disposed on an outer surface of periphery X (gasket 2232 disposed in periphery X) of sealing member 2230 and second part 2212b disposed on a side surface of periphery X of sealing member 2230. First part 2212a compresses gasket 2232 disposed in periphery X of sealing member 2230 together with groove 2214 in a direction in which an outer surface and an inner surface of the sealing member face each other. This structure maintains sealability of the inside of case 2210.

Groove 2214 includes upper ring part 2214a continuous with second part 2212b of reduced diameter part 2212, lower ring part 2214b continuous with tubular part 2211, and groove bottom 2214c connecting upper ring part 2214a and lower ring part 2214b. When viewed in the axial direction of case 2210, a part of lower ring part 2214b protrudes from an outer periphery of reduced diameter part 2212 together with tubular part 2211.

Sealing member 2230 includes sealing plate 2231 and gasket 2232 insulating sealing plate 2231 from reduced diameter part 2212. Sealing plate 2231 may also include a valve body having a circular outer shape, a metal sheet disposed closer to the inside of a battery than the valve body and connected to a central part of the valve body, and an insulating member in an annular shape interposed between outer peripheral parts of the valve body and the metal sheet. The valve body has an inclined region that continuously decreases in thickness in a radial direction from its inner peripheral side to outer peripheral side. The metal sheet may be at least partially formed thin, and may have a vent hole (not illustrated). When an intemal pressure of the battery abnormally increases, the valve body pulls the metal sheet connected to the central part of the valve body outward by receiving a gas pressure from the vent hole, and when the intemal pressure of the battery reaches a predetermined value, a thin part of the metal sheet breaks and a current path between the valve body and the metal sheet is interrupted.

Between electrode assembly 2220 and sealing member 2230, intemal insulating plate 2240 is disposed to prevent electrode assembly 2220 from coming into contact with sealing member 2230. Internal insulating plate 2240 is provided with lead hole 2241 of a predetermined size. Lead 2222 led out from the second electrode constituting electrode assembly 2220 passes through lead hole 2241, and is electrically connected to an inner surface of sealing plate 2231. Thus, sealing plate 2231 has the same polarity as that of the second electrode. In contrast, the first electrode constituting electrode assembly 2220 is electrically connected to case 2210. Thus, case 2210 has the same polarity as that of the first electrode.

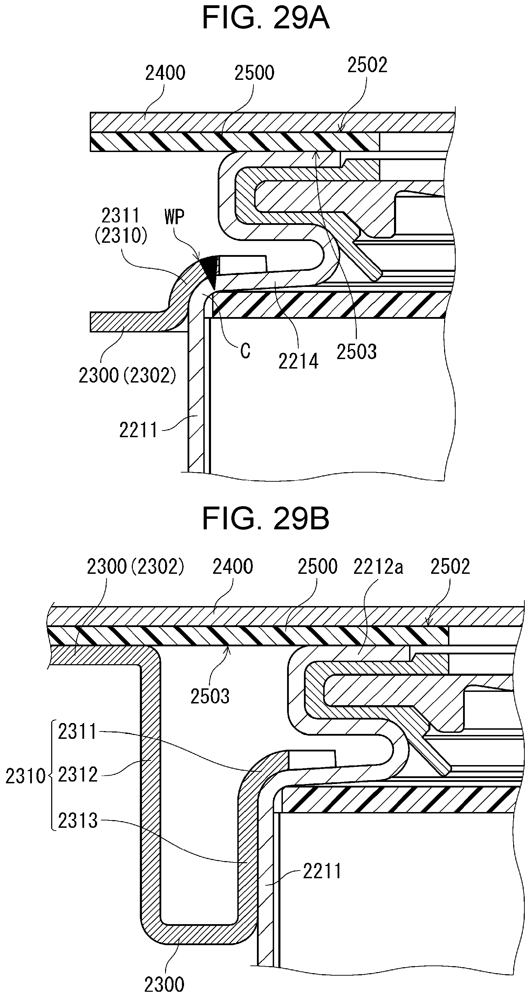

Fig. 28 is a sectional view of a main part of power storage device 2200 held by first current collector 2300. Fig. 29A is an enlarged view of a main part of Fig. 28, and illustrates a weld between periphery 2302 (periphery Y) surrounding first through-hole 2301 of first current collector 2300 and a bent part (also referred to below as bent part C of the case) at the boundary between tubular part 2211 of case 2210 and groove 2214.

Retainer 2310 provided in periphery Y includes inner flange part 2311 that is in contact with bent part C at the boundary between tubular part 2211 and groove 2214. The inner flange part 2311 has a shape obtained by removing a part from a ring, such as a shape formed by four engagement pieces. Inner flange part 2311 rises from a main surface of first current collector 2300 toward the opening of the case and extends inward in a radial direction of first through-hole 2301. Then, when viewed in the axial direction of case 2210, inner flange part 2311 is provided to cover only a region on lower ring part 2214b, the region being not shielded by upper ring part 2214a. Inner flange part 2311 is provided to cover also an end of tubular part 2211 on an outer surface of bent part C, the end being close to the boundary.

Second through-hole 2401 of second current collector 2400 is located immediately above sealing member 2230 of a corresponding one of the plurality of power storage devices 2200. For example, second through-hole 2401 serves to guide gas discharged from power storage device 2200 at an abnormality to a predetermined duct. Tongue-shaped lead 2410 is led out from the periphery of second through-hole 2401 toward the inside of the second through-hole. Tongue-shaped lead 2410 is electrically connected to an outer surface of sealing plate 2231. Thus, second current collector 2400 has the same polarity as sealing plate 2231 and the second electrode.

Fig. 29A illustrates an example of weld WP when inner flange part 2311 and bent part C of the case are welded with a laser from above reduced diameter part 2212. When reduced diameter part 2212 and first through-hole 2301 are viewed in the axial direction of case 2210, reduced diameter part 2212 has a diameter larger than an inner diameter of retainer 2310. In contrast, tubular part 2211 has an outer diameter larger than the inner diameter of retainer 2310. When reduced diameter part 2212 is caused to pass through first through-hole 2301 of first current collector 2300, inner flange part 2311 of retainer 2310 provided in periphery Y is placed overlapping bent part C of the case. Retainer 2310 and bent part C of the case have respective parts overlapping each other and being in direct contact with each other, and the respective parts can be at least partially joined by welding. This structure causes the plurality of power storage devices 2200 to be firmly fixed to and integrated with first current collector 2300. Although a welding method is not particularly limited, laser welding is convenient, for example.

Inner flange part 2311 and bent part C of the case may be at least partially welded. Inner flange part 2311 and bent part C may be welded at a plurality of welds along a part where inner flange part 2311 and bent part C overlap each other and are in direct contact with each other, or may be welded over the entire circumference of the part where inner flange part 2311 and bent part C overlap each other and are in direct contact with each other. Weld WP is not limited to the above positions.

Fig. 29B is a diagram illustrating a modified example of the exemplary embodiment of Fig. 29A. The main surface of first current collector 2300 is designed to be flush with first part 2212a of reduced diameter part 2212. That is, retainer 2310 of first current collector 2300 includes first wall 2312 that extends toward bottom 2213 of case 2210 and faces second part 2212b of reduced diameter part 2212 and tubular part 2211, second wall 2313 that is continuous with first wall 2312 and extends in a direction opposite to a direction in which first wall 2312 extends and faces tubular part 2211, and inner flange part 2311 that is provided continuously with second wall 2313. The tubular part 2211 is in contact with second wall 2313, and a large area of tubular part 2211 is restricted by second wall 2313. Thus, displacement of power storage device 2200 in the direction perpendicular to the axis of case 2210 is strictly suppressed. First current collector 2300 is increased in mechanical strength due to first wall 2312 and second wall 2313. Additionally, insulating member 2500 and second current collector 2400 described later can be prevented from becoming complicated in structure. First wall 2312 and second wall 2313 are connected at a part that may be in a tabular shape as illustrated in Fig. 9B, or may be in a curved plate shape that is formed in a U-shape as a whole including first wall 2312 and second wall 2313.

As illustrated in Fig. 22 and the like, insulating member 2500 is interposed between first current collector 2300 and second current collector 2400. Insulating member 2500 is a plate-like member having first surface 2502 and second surface 2503 located opposite to first surface 2502. Insulating member 2500 also has third through-holes 2501 at positions corresponding to sealing members 2230 of a corresponding one of the plurality of power storage devices 2200. First surface 2502 of insulating member 2500 is in contact with second current collector 2400. Then, second surface 2503 is in contact with a region of first current collector 2300 excluding retainer 2310 and first part 2212a of reduced diameter part 2212. This structure enables stacking insulating member 2500, first current collector 2300, and second current collector 2400 with almost no gap. Thus, compactness of the entire power storage module can be enhanced, and power storage device 2200 can be more firmly held. When insulating member 2500 is brought into contact with or connected to first current collector 2300, first current collector 2300 and insulating member 2500 can be fixed to each other. At this time, insulating member 2500 and first current collector 2300 may be fastened with a screw or the like. As with the second through-hole, third through-hole 2501 serves to guide the gas discharged from power storage device 2200 at an abnormality to a predetermined duct. Although Fig. 9A illustrates a gap formed between insulating member 2500 and first current collector 2300, insulating member 2500 and first current collector 2300 may be stacked to fill the gap.

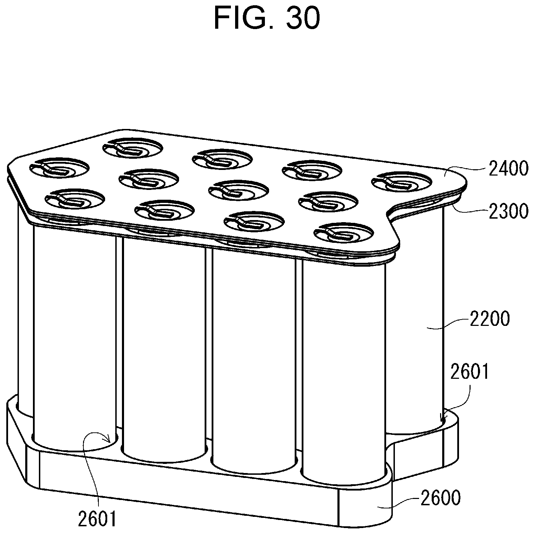

Fig. 30 is a perspective view of a power storage module according to another exemplary embodiment of the claimed invention. Power storage module 2010A has a similar structure to power storage module 2010 described above except including holder 2600 having a plurality of containers 2601 that set and position bottoms 2213 of a corresponding one of the plurality of power storage devices 2200.

When bent part C of case 2210 positioned at one end of power storage device 2200 is fixed by first current collector 2300, and bottom 2213 positioned at the other end of power storage device 2200 is held or fixed by the holder, power storage module 2010A with the plurality of power storage devices 2200 integrated more firmly can be configured.

The plurality of power storage devices 2200 are each fixed at one end to first current collector 2300, so that containers 2601 of holder 2600 each may have a shallow depth to hold or fix bottom 2213 of power storage device 2200. For example, when power storage device 2200 has an axial height (a distance from one end to the other end) indicated as H, the container of the holder may have a depth 20% or less of H. Although holder 2600 may have a bottom surface flush with a bottom surface of the container as a whole, the bottom surface may be recessed except a part where the recess (container) for setting each power storage device 2200 is formed, for weight reduction.

Although the power storage device in a cylindrical shape has been described above as an example, the present disclosure is available for power storage devices having various shapes such as a square shape.

Although the claimed invention has been described in terms of presently preferred exemplary embodiments, such disclosure should not be construed in a limiting manner. Variants will undoubtedly become apparent to the person of ordinary skill in the art to which the claimed invention belongs upon reading the above disclosure.

### INDUSTRIAL APPLICABILITY

The power storage module according to the present disclosure is available for various power storage devices, and is particularly suitable for use as a power source for vehicles such as hybrid vehicles and electric vehicles.

### REFERENCE MARKS IN THE DRAWINGS

10, 10A: power storage module
200: power storage device
201: opening
210: case
211: tubular part
212: flange part
213: bottom
220: electrode assembly
222: lead
230: sealing member
231: sealing plate
232: cap (outer ring)
233: gasket
240: internal insulating plate
241: lead hole
300: first current collector
301: first through-hole
302: periphery of first through-hole
303: wall
400: second current collector
401: second through-hole
410: tongue-shaped lead
500: insulating member
501: third through-hole
502: first surface
503: second surface
600: holder
601: container
1010, 1010A: power storage module
1200: power storage device
1201: opening
1210: case
1211: tubular part
1212: enlarged diameter part
1212a: first part
1212b: second part
1212T: opening end
1213: bottom
1214: groove in annular shape
1220: electrode assembly
1222: lead
1230: sealing member
1231: sealing plate
1232: gasket
1240: internal insulating plate
1241: lead hole
1300: first current collector
1301: first through-hole
1302: periphery
1310: retainer
1311: first wall
1312: inner flange part
1313: second wall
1400: second current collector
1401: second through-hole
1410: tongue-shaped lead
1500: insulating member
1501: third through-hole
1502: first surface
1503: second surface
1600: holder
1601: container
2010, 2010A: power storage module
2200: power storage device
2201: opening
2210: case
2211: tubular part
2212: reduced diameter part
2212a: first part
2212b: second part
2212T: opening end
2213: bottom
2214: groove
2214a: upper ring part
2214b: lower ring part
2214c: groove bottom
2220: electrode assembly
2222: lead
2230: sealing member
2231: sealing plate
2232: gasket
2240: internal insulating plate
2241: lead hole
2300: first current collector
2301: first through-hole
2302: periphery of first through-hole
2310: retainer
2311: inner flange part
2312: first wall
2313: second wall
2400: second current collector
2401: second through-hole
2410: tongue-shaped lead
2500: insulating member
2501: third through-hole
2502: first surface
2503: second surface
2600: holder
2601: container

## Claims

1. A power storage module (2010, 2010A) comprising:
a plurality of power storage devices (2200); and
a first current collector (2300) that holds the plurality of power storage devices (2200),
the plurality of power storage devices (2200) each including:
a case (2210) including an opening (2201):
an electrode assembly (2220) including a first electrode and a second electrode housed in the case (2210); and
a sealing member (2230) that seals the opening (2201),
the case (2210) including:
a tubular part (2211) including one end provided with the opening (2201); and
a bottom (2213) that closes another end of the tubular part (2211),
the case (2210) being electrically connected to the first electrode,
the first current collector (2300) including a plurality of first through-holes (2301) that each set and position a corresponding one of the plurality of electric storage devices (2200), and
the plurality of first through-holes (2301) each including a periphery (302) electrically connected to the case (2210);
wherein the case (2201) further includes a reduced diameter part (2212) that is continuous with the one end of the tubular part (2211) and includes an opening end (2212T) corresponding to the opening (2201), and a groove in an annular shape (2214) that is provided between the tubular part (2211) and the reduced diameter part (2212) and is recessed inward in a radial direction of the tubular part (2211),
wherein
the reduced diameter part (2212) includes a maximum outer diameter D3 smaller than an outer diameter D4 of the tubular part (2211),
the groove (2214) includes a minimum outer diameter D5 smaller than the maximum outer diameter D3 of the reduced diameter part (2212),
the reduced diameter part (2212) compresses the sealing member (2230),
the first current collector (2300) is electrically connected to at least one of the groove (2214) and the reduced diameter part (2212),
the first current collector (2300) overlaps a surface close to the tubular part (2211) in inner surfaces of the groove (2214),
the first current collector (2300) does not overlap a surface close to the reduced diameter part (2212) in the inner surfaces of the groove (2214),
**characterised in that**
the reduced diameter part (2212) is bent and includes a first part (2212a) disposed on an outer surface of the sealing member (2230) and a second part (2212b) disposed on a side surface of the periphery, and
the first part (2212a) and the groove (2214) compress the periphery of the sealing member (2230) in a direction in which an outer surface and an inner surface of the sealing member (2230) face each other.

2. The power storage module (2010, 2010A) according to Claim 1, wherein the periphery (2302) surrounding each of the first through-holes (2301) of the first current collector (2300) includes a retainer (2310) that receives a bent part at a boundary between the tubular part (2211) and the groove (2214).

3. The power storage module (2010, 2010A) according to Claim 2, wherein the retainer (2310) includes an inner flange part (2312) in contact with the bent part.

4. The power storage module (2010, 2010A) according to Claim 3, wherein
the retainer (2310) includes a first wall (2312) extending toward the bottom (2213) of the case (2210) and facing the second part (2212b), and
the inner flange part (2312) is continuous with the first wall (2312).

5. The power storage module (2010, 2010A) according to Claim 3, wherein
the retainer (2310) includes:
a first wall (2312) extending toward the bottom (2213) of the case (2210) and facing the second part (2212b) and the tubular part (2211); and
a second wall (2313) that is continuous with the first wall (2312), extends in a direction opposite to a direction in which the first wall (2312) extends, and faces the tubular part (2211), and
the inner flange part (2312) is continuous with the second wall (2313).

6. The power storage module (2010, 2010A) according to any one of Claims 2 to 5, wherein the bent part is welded to the inner flange part (2312).

7. The power storage module (2010, 2010A) according to any one of Claims 1 to 6, wherein the first part (2212a) is flush with a surface of the first current collector (2300).

8. The power storage module (2010, 2010A) according to any one of Claims 1 to 7, wherein
the sealing member (2230) includes:
a sealing plate (2231) with conductivity; and
a gasket (1232) that insulates the sealing plate (2231) from the reduced diameter part (2212), and
the sealing plate (2231) is electrically connected to the second electrode of the electrode assembly (2220).

9. The power storage module (2010, 2010A) according to any one of Claims 1 to 8, further comprising:
a second current collector (2400) electrically connected to the second electrode of the electrode assembly (2220),
wherein an insulating member (2500) interposed between the first current collector (2300) and the second current collector (2400),
the insulating member (2500) includes a first surface (2502) in contact with the second current collector (2400), and a second surface (2503) located opposite to the first surface (2502), the second surface (2503) being in contact with the first current collector (2300).

10. The power storage module (2010, 2010A) according to Claim 9, wherein
the second current collector (2400) includes a region facing the sealing plate (2231), the region including a second through-hole (2401), and a tongue-shaped lead (2410) extending from a periphery (2302) of the second through-hole (2401)toward an inside of the second through-hole (2401), and
the tongue-shaped lead (2410) is electrically connected to the sealing plate (2231).

11. The power storage module (2010, 2010A) according to any one of Claims 1 to 10, further comprising a holder (2600) including a plurality of containers (2601) that each set and position the bottom (2213) of a corresponding one of the plurality of power storage devices (2200).

## Patentansprüche

1. Energiespeichermodul (2010, 2010A), umfassend:
eine Mehrzahl von Energiespeichervorrichtungen (2200); und
einen ersten Stromkollektor (2300), der die Mehrzahl von Energiespeichervorrichtungen (2200) hält,
wobei die Mehrzahl von Energiespeichervorrichtungen (2200) jeweils umfasst:
ein Gehäuse (2210), das eine Öffnung (2201) umfasst;
eine Elektrodenanordnung (2220), die eine erste Elektrode und eine zweite Elektrode umfasst, die im Gehäuse (2210) untergebracht sind; und
ein Dichtungselement (2230), das die Öffnung (2201) abdichtet,
wobei das Gehäuse (2210) umfasst:
einen rohrförmigen Teil (2211), der ein Ende umfasst, das mit der Öffnung (2201) versehen ist; und
einen Boden (2213), der ein anderes Ende des rohrförmigen Teils (2211) verschließt,
wobei das Gehäuse (2210) elektrisch mit der ersten Elektrode verbunden ist,
wobei der erste Stromkollektor (2300) eine Mehrzahl von ersten Durchgangslöchern (2301) umfasst, die jeweils eine entsprechende der Mehrzahl von Energiespeichervorrichtungen (2200) einsetzen und positionieren, und
wobei die Mehrzahl von ersten Durchgangslöchern (2301) jeweils einen Umfang (302) umfasst, der elektrisch mit dem Gehäuse (2210) verbunden ist;
wobei
das Gehäuse (2201) ferner einen Teil mit reduziertem Durchmesser (2212) umfasst, der mit dem einen Ende des rohrförmigen Teils (2211) fortlaufend ist und ein Öffnungsende (2212T) umfasst, das der Öffnung (2201) entspricht, und eine Nut in einer ringförmigen Form (2214), die zwischen dem rohrförmigen Teil (2211) und dem Teil mit reduziertem Durchmesser (2212) vorgesehen ist und in einer radialen Richtung des rohrförmigen Teils (2211) nach innen vertieft ist,
wobei
der Teil mit reduziertem Durchmesser (2212) einen maximalen Außendurchmesser D3 umfasst, der kleiner ist als ein Außendurchmesser D4 des rohrförmigen Teils (2211),
die Nut (2214) einen minimalen Außendurchmesser D5 umfasst, der kleiner ist als der maximale Außendurchmesser D3 des Teils mit reduziertem Durchmesser (2212),
der Teil mit reduziertem Durchmesser (2212) das Dichtungselement (2230) zusammendrückt,
der erste Stromkollektor (2300) elektrisch mit mindestens einem von der Nut (2214) und dem Teil mit reduziertem Durchmesser (2212) verbunden ist,
der erste Stromkollektor (2300) eine Oberfläche in der Nähe des rohrförmigen Teils (2211) in Innenflächen der Nut (2214) überlappt,
der erste Stromkollektor (2300) eine Oberfläche in der Nähe des Teils mit reduziertem Durchmesser (2212) in den Innenflächen der Nut (2214) nicht überlappt,
**dadurch gekennzeichnet, dass**
der Teil mit reduziertem Durchmesser (2212) gebogen ist und einen ersten Teil (2212a) umfasst, der auf einer Außenfläche des Dichtungselements (2230) angeordnet ist, und einen zweiten Teil (2212b), der auf einer Seitenfläche des Umfangs angeordnet ist, und
der erste Teil (2212a) und die Nut (2214) den Umfang des Dichtungselements (2230) in einer Richtung zusammendrücken, in der eine Außenfläche und eine Innenfläche des Dichtungselements (2230) einander zugewandt sind.

2. Energiespeichermodul (2010, 2010A) nach Anspruch 1, wobei der Umfang (2302), der jedes der ersten Durchgangslöcher (2301) des ersten Stromkollektors (2300) umgibt, einen Halter (2310) umfasst, der einen gebogenen Teil an einer Grenze zwischen dem rohrförmigen Teil (2211) und der Nut (2214) aufnimmt.

3. Energiespeichermodul (2010, 2010A) nach Anspruch 2, wobei der Halter (2310) einen inneren Flanschteil (2312) umfasst, der mit dem gebogenen Teil in Kontakt ist.

4. Energiespeichermodul (2010, 2010A) nach Anspruch 3, wobei
der Halter (2310) eine erste Wand (2312) umfasst, die sich in Richtung des Bodens (2213) des Gehäuses (2210) erstreckt und dem zweiten Teil (2212b) zugewandt ist, und
der innere Flanschteil (2312) mit der ersten Wand (2312) fortlaufend ist.

5. Energiespeichermodul (2010, 2010A) nach Anspruch 3, wobei
der Halter (2310) umfasst:
eine erste Wand (2312), die sich in Richtung des Bodens (2213) des Gehäuses (2210) erstreckt und dem zweiten Teil (2212b) und dem rohrförmigen Teil (2211) zugewandt ist; und
eine zweite Wand (2313), die mit der ersten Wand (2312) fortlaufend ist, sich in einer Richtung entgegengesetzt zu einer Richtung erstreckt, in der sich die erste Wand (2312) erstreckt, und dem rohrförmigen Teil (2211) zugewandt ist, und
der innere Flanschteil (2312) mit der zweiten Wand (2313) fortlaufend ist.

6. Energiespeichermodul (2010, 2010A) nach einem der Ansprüche 2 bis 5, wobei der gebogene Teil an den inneren Flanschteil (2312) geschweißt ist.

7. Energiespeichermodul (2010, 2010A) nach einem der Ansprüche 1 bis 6, wobei der erste Teil (2212a) bündig mit einer Oberfläche des ersten Stromkollektors (2300) ist.

8. Energiespeichermodul (2010, 2010A) nach einem der Ansprüche 1 bis 7, wobei das Dichtungselement (2230) umfasst:
eine Dichtungsplatte (2231) mit Leitfähigkeit; und
eine Dichtung (1232), die die Dichtungsplatte (2231) vom Teil mit reduziertem Durchmesser (2212) isoliert, und
die Dichtungsplatte (2231) elektrisch mit der zweiten Elektrode der Elektrodenanordnung (2220) verbunden ist.

9. Energiespeichermodul (2010, 2010A) nach einem der Ansprüche 1 bis 8, ferner umfassend:
einen zweiten Stromkollektor (2400), der elektrisch mit der zweiten Elektrode der Elektrodenanordnung (2220) verbunden ist,
wobei ein Isolierelement (2500) zwischen dem ersten Stromkollektor (2300) und dem zweiten Stromkollektor (2400) angeordnet,
das Isolierelement (2500) eine erste Oberfläche (2502) umfasst, die mit dem zweiten Stromkollektor (2400) in Kontakt ist, und eine zweite Oberfläche (2503), die gegenüberliegend zur ersten Oberfläche (2502) angeordnet ist, wobei die zweite Oberfläche (2503) mit dem ersten Stromkollektor (2300) in Kontakt ist.

10. Energiespeichermodul (2010, 2010A) nach Anspruch 9, wobei
der zweite Stromkollektor (2400) einen Bereich umfasst, der der Dichtungsplatte (2231) zugewandt ist, wobei der Bereich ein zweites Durchgangsloch (2401) umfasst, und eine zungenförmige Ableitung (2410), die sich von einem Umfang (2302) des zweiten Durchgangslochs (2401) zu einem Inneren des zweiten Durchgangslochs (2401) erstreckt, und
die zungenförmige Ableitung (2410) elektrisch mit der Dichtungsplatte (2231) verbunden ist.

11. Energiespeichermodul (2010, 2010A) nach einem der Ansprüche 1 bis 10, ferner umfassend einen Halter (2600), der eine Mehrzahl von Behältern (2601) umfasst, die jeweils den Boden (2213) einer entsprechenden der Mehrzahl von Energiespeichervorrichtungen (2200) einsetzen und positionieren.

## Revendications

1. Module de stockage d'énergie (2010, 2010A) comprenant :
une pluralité de dispositifs de stockage d'énergie (2200) ; et
un premier collecteur de courant (2300) qui maintient la pluralité de dispositifs de stockage d'énergie (2200),
la pluralité de dispositifs de stockage d'énergie (2200) comprenant chacun :
un boîtier (2210) comprenant une ouverture (2201) ;
un ensemble d'électrodes (2220) comprenant une première électrode et une seconde électrode logées dans le boîtier (2210) ; et
un organe d'étanchéité (2230) qui scelle l'ouverture (2201),
le boîtier (2210) comprenant :
une partie tubulaire (2211) comprenant une extrémité pourvue de l'ouverture (2201) ; et
un fond (2213) qui ferme une autre extrémité de la partie tubulaire (2211),
le boîtier (2210) étant électriquement connecté à la première électrode,
le premier collecteur de courant (2300) comprenant une pluralité de premiers trous traversants (2301) qui chacun mettent en place et positionnent un dispositif correspondant parmi la pluralité de dispositifs de stockage électrique (2200), et
la pluralité de premiers trous traversants (2301) comprenant chacun une périphérie (302) électriquement connectée au boîtier (2210) ;
dans lequel
le boîtier (2201) comprend en outre une partie de diamètre réduit (2212) qui est continue avec ladite extrémité de la partie tubulaire (2211) et comprend une extrémité d'ouverture (2212T) correspondant à l'ouverture (2201), et une rainure de forme annulaire (2214) qui est prévue entre la partie tubulaire (2211) et la partie de diamètre réduit (2212) et est en retrait vers l'intérieur dans une direction radiale de la partie tubulaire (2211),
dans lequel
la partie de diamètre réduit (2212) comprend un diamètre extérieur maximal D3 plus petit qu'un diamètre extérieur D4 de la partie tubulaire (2211),
la rainure (2214) comprend un diamètre extérieur minimal D5 plus petit que le diamètre extérieur maximal D3 de la partie de diamètre réduit (2212),
la partie de diamètre réduit (2212) comprime l'organe d'étanchéité (2230),
le premier collecteur de courant (2300) est électriquement connecté à au moins l'un parmi la rainure (2214) et la partie de diamètre réduit (2212),
le premier collecteur de courant (2300) recouvre une surface proche de la partie tubulaire (2211) dans des surfaces intérieures de la rainure (2214),
le premier collecteur de courant (2300) ne recouvre pas une surface proche de la partie de diamètre réduit (2212) dans les surfaces intérieures de la rainure (2214),
**caractérisé en ce que**
la partie de diamètre réduit (2212) est pliée et comprend une première partie (2212a) disposée sur une surface extérieure de l'organe d'étanchéité (2230) et une seconde partie (2212b) disposée sur une surface latérale de la périphérie, et
la première partie (2212a) et la rainure (2214) compriment la périphérie de l'organe d'étanchéité (2230) dans une direction dans laquelle une surface extérieure et une surface intérieure de l'organe d'étanchéité (2230) se font face.

2. Module de stockage d'énergie (2010, 2010A) selon la revendication 1, dans lequel la périphérie (2302) entourant chacun des premiers trous traversants (2301) du premier collecteur de courant (2300) comprend un dispositif de retenue (2310) qui reçoit une partie pliée à une limite entre la partie tubulaire (2211) et la rainure (2214).

3. Module de stockage d'énergie (2010, 2010A) selon la revendication 2, dans lequel le dispositif de retenue (2310) comprend une partie de bride intérieure (2312) en contact avec la partie pliée.

4. Module de stockage d'énergie (2010, 2010A) selon la revendication 3, dans lequel
le dispositif de retenue (2310) comprend une première paroi (2312) s'étendant vers le fond (2213) du boîtier (2210) et faisant face à la seconde partie (2212b), et
la partie de bride intérieure (2312) est continue avec la première paroi (2312).

5. Module de stockage d'énergie (2010, 2010A) selon la revendication 3, dans lequel
le dispositif de retenue (2310) comprend :
une première paroi (2312) s'étendant vers le fond (2213) du boîtier (2210) et faisant face à la seconde partie (2212b) et à la partie tubulaire (2211) ; et
une seconde paroi (2313) qui est continue avec la première paroi (2312), s'étend dans une direction opposée à une direction dans laquelle la première paroi (2312) s'étend, et fait face à la partie tubulaire (2211), et
la partie de bride intérieure (2312) est continue avec la seconde paroi (2313).

6. Module de stockage d'énergie (2010, 2010A) selon l'une quelconque des revendications 2 à 5, dans lequel la partie pliée est soudée à la partie de bride intérieure (2312).

7. Module de stockage d'énergie (2010, 2010A) selon l'une quelconque des revendications 1 à 6, dans lequel la première partie (2212a) est affleurante avec une surface du premier collecteur de courant (2300).

8. Module de stockage d'énergie (2010, 2010A) selon l'une quelconque des revendications 1 à 7, dans lequel
l'organe d'étanchéité (2230) comprend :
une plaque d'étanchéité (2231) conductrice ; et
un joint (1232) qui isole la plaque d'étanchéité (2231) de la partie de diamètre réduit (2212), et
la plaque d'étanchéité (2231) est électriquement connectée à la seconde électrode de l'ensemble d'électrodes (2220).

9. Module de stockage d'énergie (2010, 2010A) selon l'une quelconque des revendications 1 à 8, comprenant en outre :
un second collecteur de courant (2400) électriquement connecté à la seconde électrode de l'ensemble d'électrodes (2220),
dans lequel un organe isolant (2500) est interposé entre le premier collecteur de courant (2300) et le second collecteur de courant (2400),
l'organe isolant (2500) comprend une première surface (2502) en contact avec le second collecteur de courant (2400), et une seconde surface (2503) située à l'opposé de la première surface (2502), la seconde surface (2503) étant en contact avec le premier collecteur de courant (2300).

10. Module de stockage d'énergie (2010, 2010A) selon la revendication 9, dans lequel
le second collecteur de courant (2400) comprend une région faisant face à la plaque d'étanchéité (2231), la région comprenant un second trou traversant (2401), et une languette en forme de langue (2410) s'étendant depuis une périphérie (2302) du second trou traversant (2401) vers un intérieur du second trou traversant (2401), et
la languette en forme de langue (2410) est électriquement connectée à la plaque d'étanchéité (2231).

11. Module de stockage d'énergie (2010, 2010A) selon l'une quelconque des revendications 1 à 10, comprenant en outre un support (2600) comprenant une pluralité de contenants (2601) qui chacun mettent en place et positionnent le fond (2213) d'un dispositif correspondant parmi la pluralité de dispositifs de stockage d'énergie (2200).
